# EUROPEAN PATENT APPLICATION

(11) **EP 4 823 195 A1**
(43) Date of publication of application: **14.10.2026**
(21) Application number: 23960469.7
(22) Date of filing: 05.12.2023
(51) Int. Cl.: H04W 64/00

(54) **POSITION PREDICTION METHOD AND APPARATUS, DEVICE, CHIP, AND COMPUTER READABLE STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); LIU, Wendong, Dongguan, Guangdong 523860 (CN)
(74) Representative: Grassi, Stefano
(86) International application number: PCT/CN2023/136548
(87) International publication number: WO 2025/118155

(57) **Abstract**

Embodiments of the present application provide a position prediction method and apparatus, a device, a chip, and a computer readable storage medium. The method comprises: receiving first configuration information, wherein the first configuration information is used for instructing a terminal to perform position prediction by using first measurement results respectively corresponding to K first moments; and on the basis of the first configuration information and the first measurement results respectively corresponding to the K first moments, determining first prediction results of the terminal respectively corresponding to M second moments, wherein the first measurement results respectively corresponding to the K first moments are obtained by measuring one or more received first downlink reference signals respectively corresponding to the K first moments, the first prediction results are related to position information of the terminal, the second moments are future moments after the first moments, and K and M are positive integers greater than or equal to 1. In this way, the capability of terminal position prediction is improved, and thus the accuracy of a terminal device using downlink transmission to predict the position of the terminal at a second moment is improved.

## Description

### TECHNICAL FIELD

Embodiments of the disclosure relate to the technical field of communications, and particularly to, a position prediction method and apparatus, a device, a chip, and a computer-readable storage medium.

### BACKGROUND

In current terminal positioning schemes, a position of a terminal can be determined by some conventional positioning methods. For example, the terminal can directly compute its own position; or, the terminal may report a measurement result to a Location Management Function (LMF) of a network device, and the LMF computes the position of the terminal according to the collected measurement result; or, the network device may report measurement results of a plurality of Transmission Reception points (TRPs) to the LMF, and the LMF computes the position of the terminal based on the collected measurement results.

In the related art, a position of the terminal at a current moment is usually estimated by a related algorithm. However, due to the mobility of the terminal device, especially in high-speed scenarios, the position of the terminal changes very rapidly, and only estimating the current position of the terminal is not conducive to planning the deployment in advance. Therefore, in the current terminal positioning schemes, the accuracy of predicting the position of the terminal at a future moment is low.

### SUMMARY

Embodiments of the disclosure provide a position prediction method and apparatus, a device, a chip, and a computer-readable storage medium, which can improve the accuracy of predicting the position of a terminal device.

In a first aspect, an embodiment of the disclosure provides a position prediction method, applied to a terminal, the method including operations as follows.

First configuration information is received, wherein the first configuration information is used to instruct the terminal to perform position prediction by using first measurement results respectively corresponding to K first moments.

First prediction results of the terminal respectively corresponding to M second moments are determined based on the first configuration information and the first measurement results respectively corresponding to the K first moments.

Herein, the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1.

In a second aspect, an embodiment of the disclosure provides a position prediction method, applied to a second network device, the method includes operations as follows.

Second configuration information is received, wherein the second configuration information is used to instruct the second network device to perform position prediction by using second measurement results respectively corresponding to K first moments.

Second prediction results of a terminal respectively corresponding to M second moments are determined based on the second configuration information and the second measurement results respectively corresponding to the K first moments.

Herein, the second measurement results corresponding to each of the K first moments are obtained by measuring one or more first uplink reference signals corresponding to each of the K received first moments; the second prediction result is related to the position information of the terminal; the second moment is a future moment after the first moment; K and M are positive integers greater than or equal to 1.

In a third aspect, an embodiment of the disclosure provides a position prediction method, applied to a first network device, the method includes operations as follows.

Configuration information is determined, wherein the configuration information is used to instruct the first network device to perform position prediction by using measurement results respectively corresponding to K first moments.

Prediction results of a terminal respectively corresponding to M second moments are determined based on the configuration information and the measurement results respectively corresponding to the K first moments.

Herein, the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1.

In a fourth aspect, an embodiment of the disclosure provides a position prediction apparatus, applied to a terminal, the apparatus including a first acquiring unit and a first determining unit.

The first acquiring unit is configured to receive first configuration information, wherein the first configuration information is used to instruct the terminal to perform position prediction by using first measurement results respectively corresponding to K first moments.

The first determining unit is configured to determine first prediction results of the terminal respectively corresponding to M second moments based on the first configuration information and the first measurement results respectively corresponding to the K first moments.

Herein, the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1.

In a fifth aspect, an embodiment of the disclosure provides a position prediction apparatus, applied to a second network device, the apparatus including a second acquiring unit and a second determining unit.

The second acquiring unit is configured to receive second configuration information, wherein the second configuration information is used to instruct the second network device to perform position prediction by using second measurement results respectively corresponding to K first moments.

The second determining unit is configured to determine second prediction results of a terminal respectively corresponding to M second moments based on the second configuration information and the second measurement results respectively corresponding to the K first moments.

Herein, the second measurement results corresponding to each of the K first moments are obtained by measuring one or more first uplink reference signals corresponding to each of the K received first moments; the second prediction result is related to the position information of the terminal; the second moment is a future moment after the first moment; K and M are positive integers greater than or equal to 1.

In a sixth aspect, an embodiment of the disclosure provides a position prediction apparatus, applied to a first network device, the apparatus including a third determining unit.

The third determining unit is configured to: determine configuration information, wherein the configuration information is used to instruct the first network device to perform position prediction by using measurement results respectively corresponding to K first moments, and
determine prediction results of a terminal respectively corresponding to M second moments based on the configuration information and the measurement results respectively corresponding to the K first moments.

Herein, the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1.

In a seventh aspect, an embodiment of the disclosure provides a communication device including a memory, a processor and a transceiver.

The memory is configured to store a computer program.

The processor, connected to the memory, is configured to invoke and execute the computer program from the memory to implement the method of any of the first to third aspects.

The transceiver is configured to receive and send signals in the process of sending and receiving information to or from other external network elements.

In an eighth aspect, an embodiment of the disclosure provides a chip including a memory, a processor and a transceiver.

The memory is configured to store a computer program.

The processor, connected to the memory, is configured to invoke and execute the computer program from the memory to cause a device mounted with the chip to perform the method of any of the first to third aspects.
a transceiver is configured to receive and send signals in the process of sending and receiving information to or from the device or chip.

In a ninth aspect, an embodiment of the disclosure provides a computer-readable storage medium having stored thereon a computer program that, when executed by at least one processor, implements the method of any of the first to third aspects.

The embodiments of the disclosure provide a position prediction method and apparatus, a device, a chip, and a computer-readable storage medium. On the side of the terminal, first configuration information is received, wherein the first configuration information is used to instruct the terminal to perform position prediction by using first measurement results respectively corresponding to K first moments. First prediction results of the terminal respectively corresponding to M second moments are determined based on the first configuration information and the first measurement results respectively corresponding to the K first moments. Herein, the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1. In the above process, the terminal obtains the K first measurement results by measuring one or more first downlink reference signals between the second network device and the terminal corresponding to each of the K first moments, so that the terminal can predict the position information of the terminal at the second moments based on the first configuration information and the first measurement results respectively corresponding to the K first moments. In this way, it helps to improve the positioning accuracy of the terminal and the ability of position prediction, so that the terminal can effectively track and position a moving trajectory of the terminal device, and thus improves the accuracy of the terminal device to predict position information of the terminal at second moments using downlink transmissions.

Similarly, on the side of the second network device side, second configuration information is received, wherein the second configuration information is used to instruct the second network device to perform position prediction by using second measurement results respectively corresponding to K first moments. Second prediction results of a terminal respectively corresponding to M second moments are determined based on the second configuration information and the second measurement results respectively corresponding to the K first moments. Herein, the second measurement results corresponding to each of the K first moments are obtained by measuring one or more first uplink reference signals corresponding to each of the K received first moments; the second prediction result is related to the position information of the terminal; the second moment is a future moment after the first moment; K and M are positive integers greater than or equal to 1. In the above process, the second network device obtains the K second measurement results by measuring one or more first uplink reference signals between the second network device and the terminal corresponding to each of the K first moments, so that the second network device can predict the position information of the terminal at the second moments based on the second configuration information and the second measurement results respectively corresponding to the K first moments. In this way, it helps to improve the positioning accuracy of the second network device and the ability of position prediction, so that the second network device can effectively track and position a moving trajectory of the terminal device, and thus improves the accuracy of the second network device to predict position information of the terminal at second moments using uplink transmissions.

Similarly, on the side of the first network device, configuration information is determined, wherein the configuration information is used to instruct the first network device to perform position prediction by using measurement results respectively corresponding to K first moments. Prediction results of a terminal respectively corresponding to M second moments are determined based on the configuration information and the measurement results respectively corresponding to the K first moments. Herein, the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1. In the above process, the first network device obtains the K measurement results by measuring one or more reference signals corresponding to each of the K first moments, so that the first network device can predict the position information of the terminal at the second moments based on the configuration information and the measurement results respectively corresponding to the K first moments. In this way, it helps to improve the positioning accuracy of the first network device and the ability of position prediction, so that the first network device can effectively track and position a moving trajectory of the terminal device, and thus improves the accuracy of the first network device to predict position information of the terminal at second moments using uplink transmissions.

### BRIEF DESCRIPTION OF THE DRAWINGS

The accompanying drawings, which are incorporated into and form a part of the specification, illustrate embodiments consistent with the disclosure and, together with the specification, serve to illustrate technical solutions of the disclosure. It is apparent that the accompanying drawings in the following description are only related to some embodiments of the disclosure, and for those skilled in the art, other accompanying drawings can be obtained from these accompanying drawings without creative efforts.

The flowcharts shown in the drawings are merely illustrative and do not necessarily include all contents and operations/steps, nor do the operations/steps have to be performed in the order described. For example, some operations/steps may also be decomposed, while others may be merged or partially merged, so the order of actual execution may change depending on the actual situation.
FIG. 1 is a first diagram showing an application scenario of an optional position prediction method according to an embodiment of the disclosure.
FIG. 2 is a second diagram showing an application scenario of an optional position prediction method according to an embodiment of the disclosure.
FIG. 3 is a schematic structural diagram of optional neurons according to an embodiment of the disclosure.
FIG. 4 is a schematic structural diagram of an optional deep neural network according to an embodiment of the disclosure.
FIG. 5 is a schematic structural diagram of an optional convolutional neural network according to an embodiment of the disclosure.
FIG. 6 is a schematic structural diagram of an optional Long Short-Term Memory (LSTM) artificial neural network according to an embodiment of the disclosure.
FIG. 7 is a first schematic flowchart of an optional position prediction method according to an embodiment of the disclosure.
FIG. 8 is a schematic diagram of an optional downlink-based positioning method according to an embodiment of the disclosure.
FIG. 9 is a first schematic diagram showing interactions of an optional position prediction method according to an embodiment of the disclosure.
FIG. 10 is a second schematic diagram showing interactions of an optional position prediction method according to an embodiment of the disclosure.
FIG. 11 is a second schematic flowchart of an optional position prediction method according to an embodiment of the disclosure.
FIG. 12 is a schematic diagram of an optional uplink-based positioning method according to an embodiment of the disclosure.
FIG. 13 is a third schematic diagram showing interactions of an optional position prediction method according to an embodiment of the disclosure.
FIG. 14 is a third schematic flowchart of an optional position prediction method according to an embodiment of the disclosure.
FIG. 15 is a fourth schematic diagram showing interactions of an optional position prediction method according to an embodiment of the disclosure.
FIG. 16 is a fifth schematic diagram showing interactions of an optional position prediction method according to an embodiment of the disclosure.
FIG. 17 is a fourth schematic flowchart of an optional position prediction method according to an embodiment of the disclosure.
FIG. 18 is a fifth schematic flowchart of an optional position prediction method according to an embodiment of the disclosure.
FIG. 19 is a sixth schematic flowchart of an optional position prediction method according to an embodiment of the disclosure.
FIG. 20 is a seventh schematic flowchart of an optional position prediction method according to an embodiment of the disclosure.
FIG. 21 is a first schematic structural diagram of an optional position prediction apparatus according to an embodiment of the disclosure.
FIG. 22 is a second schematic structural diagram of an optional position prediction apparatus according to an embodiment of the disclosure.
FIG. 23 is a third schematic structural diagram of an optional position prediction apparatus according to an embodiment of the disclosure.
FIG. 24 is a schematic structural diagram of an optional communication device according to an embodiment of the disclosure.
FIG. 25 is a schematic structural diagram of an optional chip according to an embodiment of the disclosure.
FIG. 26 is a schematic diagram of an optional communication system according to an embodiment of the disclosure.

### DETAILED DESCRIPTION

To gain a more comprehensive understanding of the characteristics and technical content of the embodiments of the disclosure, the implementation of the embodiments of the disclosure will be described in detail below with reference to the accompanying drawings, which are for reference and description only and are not intended to limit the embodiments of the disclosure.

Unless otherwise defined, meanings of all technical and scientific terms used in the embodiments of the disclosure are the same as those usually understood by a person skilled in the technical field to which the embodiments of the disclosure belong. Terms used in the embodiments of the disclosure are merely intended to describe objectives of the embodiments of the disclosure, and are not intended to limit the disclosure.

In the following description, the term "some embodiments" describes subsets of all possible embodiments, but it may be understood that "some embodiments" may be the same subset or different subsets of all the possible embodiments, and can be combined with each other without conflict.

It is to be noted that the terms "first", "second", and "third" involved in the embodiments of the disclosure are merely intended to distinguish between similar objects rather than describe a specific order of objects. It can be understood that the "first", "second", and "third" are interchangeable in order in proper circumstances, so that embodiments of the disclosure described herein can be implemented in an order other than the order illustrated or described herein.

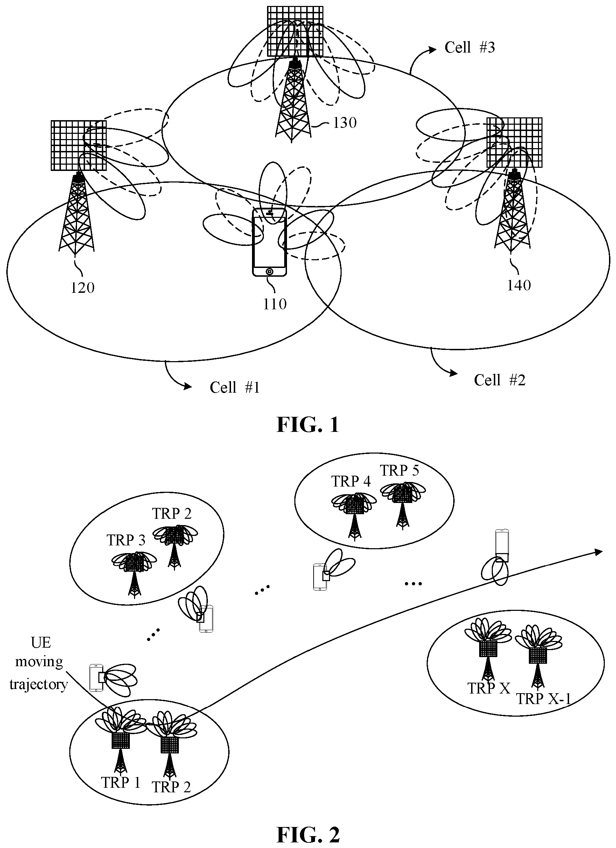

FIG. 1 is a schematic diagram showing an application scenario according to an embodiment of the disclosure.

As shown in FIG. 1, the communication system 100 may include a terminal (such as the terminal 110 in FIG. 1) and network devices (such as a network device 120, a network device 130, and a network device 140 in FIG. 1). The network device may communicate with the terminal through an air interface. Exemplarily, the network device 120, the network device 130 and the network device 140 may be located in, or may serve, different cells, for example. For example, in the communication system 100, the network device 120 is located in a cell #1, the network device 130 is located in a cell #2, and the network device 130 is located in a cell #3. Here, the terminal 110 may be located in one or more cells, for example, in the communication system 100, the terminal 110 is located in the cell #1. In this scenario, the cell #1 is a serving cell of the terminal 110, and the cell #2 and cell #3 are non-serving cells of the terminal 110. In one example, the network device may be, for example, a TRP, an Antenna Point (AP), or a base station.

In FIG. 1, a union of beams (pairs) indicated by solid lines and dashed lines indicate a universal set of beams (pairs) between each cell and the terminal, beams (pairs) indicated by solid lines are beams (pairs) that need to be measured by the terminal or the network device, and beams (pairs) indicated by dashed lines are beams (pairs) that do not need to be measured by the terminal or the network device, but belong to the universal set of beams (pairs).

It is to be understood that the embodiments of the present disclosure are illustrative only with the communication system 100 but are not limited thereto. That is, the technical solutions of the embodiments of the present disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a New Radio (NR) communication system), or a future communication system, etc.

In the communication system 100 illustrated in FIG. 1, the network devices (e.g., the network device 120, the network device 130, and the network device 140) may be access network devices communicating with the terminal (e.g., the terminal 110). The access network devices may provide communication coverage for a particular geographic area and may communicate with the terminal (e.g. UE) located within a coverage area.

In some embodiments, the network device may be an Evolutionary Node B (eNB or eNodeB) in a Long Term Evolution (LTE) system, or a Next Generation Radio Access Network (NG RAN) device, or a base station (gNB) in an NR system, or a radio controller in a Cloud Radio Access Network (CRAN), or the network device may be a macro base station, a micro base station (also referred to as a small station), a satellite, a Radio Network Controller (RNC), a Node B (NB), a Base Station Controller (BSC), a Base Transceiver Station (BTS), a home base station (e.g., Home Evolved NodeB or Home Node B (HNB)), a Baseband Unit (BBU), an Access Point (AP), a wireless relay node, a wireless backhaul node, a Transmission Point (TP), or a Transmission and Reception Point (TRP) in a Wireless Fidelity (WiFi) system, and the like. The network device may also be a relay station, an access point, an in-vehicle device, a wearable device, a hub, a switch, a bridge, a router, or a network device in a future evolving Public Land Mobile Network (PLMN), etc.

In some embodiments, the terminal may be any terminal device including but not limited to a terminal device in wired or wireless connection with the network device or other terminal devices.

In some embodiments, the terminal in the embodiments of the present disclosure may refer to an access terminal, a User Equipment (UE), a user unit, a user station, a mobile station, a remote station, a remote terminal, a mobile device, a user terminal, a terminal device, a wireless communication device, a user agent or a user apparatus. The access terminal may be a cellular telephone, a cordless telephone, a Session Initiation Protocol (SIP) telephone, an Internet of Things (IoT) device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, or the like.

In some embodiments, the terminal may be used for Device to Device (D2D) communication.

It is to be understood that specific forms of the terminal and the network device are not particularly limited in the embodiments of the present disclosure, and are merely exemplary descriptions herein.

In some embodiments, the wireless communication system 100 may also include a core network device (not illustrated in FIG. 1) that communicates with the network device. The core network device may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device may also be an Evolved Packet Core (EPC) device of the LTE network, for example, a Session Management Function + Core Packet Gateway (SMF+PGW-C) device. It is to be understood that SMF+PGW-C can achieve the same functions as SMF and PGW-C simultaneously. In the process of network evolution, the above core network device may also be called by other names, or a new network entity may be formed by dividing the functions of the core network, which is not limited in the embodiments of the present disclosure.

In some embodiments, various functional units in the communication system 100 may also establish connections therebetween through a next generation (NG) interface to realize communication.

In some embodiments, the terminal device establishes an air interface connection with the access network device through an NR interface for transmitting user plane data and control plane signaling. The terminal device may establish a control plane signaling connection with an AMF through NG interface 1 (abbreviated as N1). The access network device such as a next generation radio access base station (gNB) may establish a user plane data connection with a UPF through an NG interface 3 (abbreviated as N3). The access network device may establish a control plane signaling connection with the AMF through NG interface 2 (abbreviated as N2). The UPF may establish a control plane signaling connection with an SMF through NG interface 4 (abbreviated as N4). UPF may interact user plane data with a data network through NG interface 6 (abbreviated as N6). The AMF may establish control plane signaling connection with the SMF through NG interface 11 (abbreviated as N11). The SMF may establish a control plane signaling connection with a PCF through NG interface 7 (abbreviated as N7).

FIG. 1 exemplarily illustrates three network devices and one terminal. Optionally, the wireless communication system 100 may include one or more network devices, and other numbers of terminals may be included within the coverage of each network device, which is not limited by the embodiments of the present disclosure.

It is to be noted that FIG. 1 is only illustrative of the system to which the present disclosure is applied, and of course, the method illustrated in the embodiments of the present disclosure can also be applied to other systems. In addition, the terms "system" and "network" are often used interchangeably herein. The term "and/or" herein is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or". It should be further understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It should be further understood that the term "correspond" mentioned in the embodiments of the present disclosure may mean that there is a direct correspondence or an indirect correspondence between two items, may also mean that there is an association relationship between the two items, and may also be a relationship such as indication and being indicated, configuration and being configured, etc. It should be further understood that the "pre-defined" or "pre-defined rule" mentioned in the embodiments of the present disclosure may be achieved by pre-storing corresponding codes, tables or other means used for indicating relevant information in devices (e.g., including terminal devices and network devices), and the specific implementation thereof is not limited in the present disclosure. For example, "pre-defined" may refer to what is defined in a protocol. It should be further understood that in the embodiments of the present disclosure, the "protocol" may be a standard protocol in the communication field. For example, the protocol may include an LTE protocol, an NR protocol, and related protocols applied in future communication systems, which are not limited in the present disclosure.

It is to be noted that a "beam (pair)" in the embodiments of the present disclosure may refer to a beam, including a transmitting beam or a receiving beam, or may refer to a pair of beams, such as a pair of a transmitting beam and a receiving beam. The meaning of "beam (pair)" may be applied to both a case of uplink transmission and a case of downlink transmission. In the embodiments of the present disclosure, the "beam (pair)" may also be referred to as a spatial filter.

In the current protocol, the current position of the terminal device may be located by a conventional positioning method, or the current protocol provides that the current position of the terminal device may be further estimated by a neural network model. As shown in the application scenario of the position prediction method in FIG. 2, it can be seen that the terminal (UE) will pass through different cells in the process of moving, and different cells include multiple TRPs, such as TRP1 and TRP2, TRP2 and TRP3, TRP4 and TRP5, TRPX and TRPX +1. Due to the mobility of the terminal device, especially in high-speed scenarios, the position of the terminal changes very rapidly, and only estimating the current position of the terminal is not conducive to planning the deployment in advance. Therefore, how to use the neural network model to predict the position of the terminal device at a future moment is not discussed in the related art.

In view of this, the embodiments of the disclosure provide a position prediction method and apparatus, a device, a chip, and a computer-readable storage medium,

The embodiments of the disclosure provide a position prediction method and apparatus, a device, a chip, and a computer-readable storage medium. On the side of the terminal, first configuration information is received, wherein the first configuration information is used to instruct the terminal to perform position prediction by using first measurement results respectively corresponding to K first moments. First prediction results of the terminal respectively corresponding to M second moments are determined based on the first configuration information and the first measurement results respectively corresponding to the K first moments. Herein, the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1. In the above process, the terminal obtains the K first measurement results by measuring one or more first downlink reference signals between the second network device and the terminal corresponding to each of the K first moments, so that the terminal can predict the position information of the terminal at the second moments based on the first configuration information and the first measurement results respectively corresponding to the K first moments. In this way, it helps to improve the positioning accuracy of the terminal and the ability of position prediction, so that the terminal can effectively track and position a moving trajectory of the terminal device, and thus improves the accuracy of the terminal device to predict position information of the terminal at second moments using downlink transmissions.

Similarly, on the side of the second network device side, second configuration information is received, wherein the second configuration information is used to instruct the second network device to perform position prediction by using second measurement results respectively corresponding to K first moments. Second prediction results of a terminal respectively corresponding to M second moments are determined based on the second configuration information and the second measurement results respectively corresponding to the K first moments. Herein, the second measurement results corresponding to each of the K first moments are obtained by measuring one or more first uplink reference signals corresponding to each of the K received first moments; the second prediction result is related to the position information of the terminal; the second moment is a future moment after the first moment; K and M are positive integers greater than or equal to 1. In the above process, the second network device obtains the K second measurement results by measuring one or more first uplink reference signals between the second network device and the terminal corresponding to each of the K first moments, so that the second network device can predict the position information of the terminal at the second moments based on the second configuration information and the second measurement results respectively corresponding to the K first moments. In this way, it helps to improve the positioning accuracy of the second network device and the ability of position prediction, so that the second network device can effectively track and position a moving trajectory of the terminal device, and thus improves the accuracy of the second network device to predict position information of the terminal at second moments using uplink transmissions.

Similarly, on the side of the first network device, configuration information is determined, wherein the configuration information is used to instruct the first network device to perform position prediction by using measurement results respectively corresponding to K first moments. Prediction results of a terminal respectively corresponding to M second moments are determined based on the configuration information and the measurement results respectively corresponding to the K first moments. Herein, the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1. In the above process, the first network device obtains the K measurement results by measuring one or more reference signals corresponding to each of the K first moments, so that the first network device can predict the position information of the terminal at the second moments based on the configuration information and the measurement results respectively corresponding to the K first moments. In this way, it helps to improve the positioning accuracy of the first network device and the ability of position prediction, so that the first network device can effectively track and position a moving trajectory of the terminal device, and thus improves the accuracy of the first network device to predict position information of the terminal at second moments using uplink transmissions.

In order to facilitate understanding of the technical solutions of the embodiments of the disclosure, the related technologies of the embodiments of the disclosure will be described below, and the related technologies below, as optional solutions, can be arbitrarily combined with the technical solutions of the embodiments of the disclosure, and all combinations thereof belong to the scope of protection of the embodiments of the disclosure.

### 1. Neural Network (NN) and Machine Learning (ML)

### 1) Neuron structure

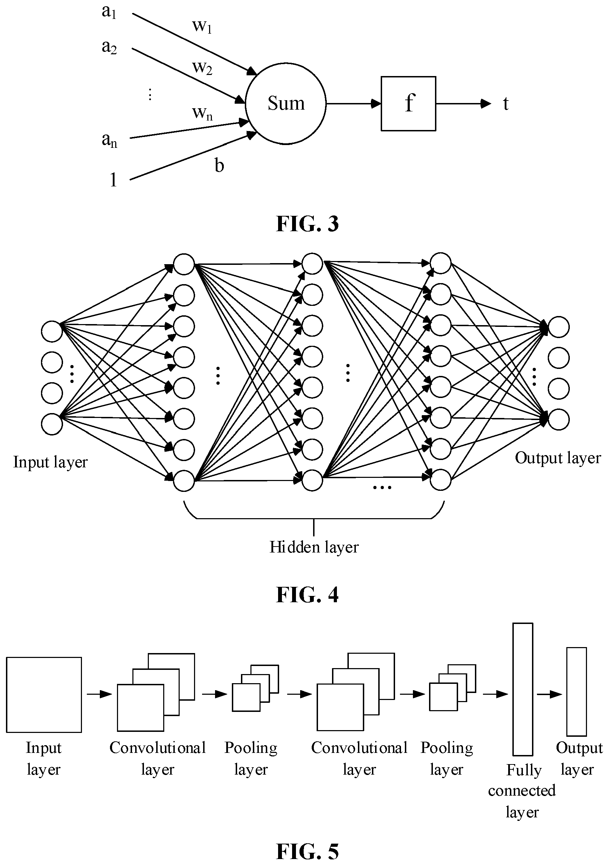

A neural network is an operation model composed of multiple neuron nodes connected to each other, where the connection between nodes represents a weighted value (called weight) from an input signal to an output signal; each node performs a weighted sum of different input signals and outputs them through a specific activation function. The structure of a neuron is shown in FIG. 3, where a₁, a₂, ..., aₙ and 1 are the inputs of the neuron, w₁, w₂, ..., wₙ and b represent the weights, Sum represents a summation function, f represents the activation function, and t is an output result.

Specifically, the neuron includes at least the following structures: input, weights, summation unit, activation function, bias, and output. The neuron receives information from other neurons or input from the external, and weights are assigned to these inputs, which represent relative importance of the inputs. Each input is associated with a weight to adjust the influence of the input, and the larger the weight, the greater the influence of the corresponding input on the neuron. The inputs and the corresponding weights are fed into a summer to calculate their weighted sum. The result of the summation is passed to an activation function, such as Sigmoid and Rectified Linear Unit (ReLU), to produce the output of the neuron. The activation function introduces nonlinearity, which enables the neural network to learn complex patterns. In addition to the weights and inputs, the neuron has a bias term used to adjust the overall summation result, and the bias allows the neuron to learn an output that deviates from zero. The output of the activation function is a final output of the neuron, which will be passed to subsequent neurons or as the output of the whole neural network. In a neural network, many such neurons are connected to form a network. The weights of these connections can be adjusted through a training process, and the neural network learns to adapt to the input data and produce useful outputs. The number of layers and the structure of the neural network vary from task to task, for example, a Multilayer Perceptron (MLP) has multiple hidden layers.

### 2) Deep Neural Network (DNN)

FIG. 4 shows a simple deep neural network (also known as a fully connected model). The neural network includes an input layer, a hidden layer and an output layer. Through different connection methods of multiple neurons, combined with different weights and activation functions, different outputs can be produced, and then the mapping relationship from input(s) to output(s) can be fitted. For example, each upper-level node may be connected to all nodes at a next level, forming a fully connected model. In the embodiments of the disclosure, the NN model can be used to predict the position information of the terminal.

Specifically, the DNN model has multiple hidden layers for learning multilevel feature representations of input data, and these networks typically contain many neurons and a large number of weight parameters, enabling them to simulate complex nonlinear relationships and features. The DNN includes multiple layers, including an input layer, multiple hidden layers, and an output layer, each of which includes multiple neurons connected to a previous layer and a next layer by weights. The multi-layered structure allows the network to learn hierarchical feature representations, and each hidden layer can capture features of different abstraction levels of the input data, enabling the network to learn more complex patterns. DNN learns the weight parameters by training data so that the output of the network can be adapted to a given task, and the training process usually uses a backpropagation algorithm to adjust the weights by minimizing the loss function. Each neuron usually uses a nonlinear activation function, such as Sigmoid and ReLU, which introduces nonlinear properties, so that the network can learn and represent more complex functions. The DNN model usually requires a large amount of annotated data for training, and require powerful computing resources for efficient weight updating. Common deep learning structures include Multilayer Perceptron (MLP), Convolutional Neural Network (CNN), Recurrent Neural Network (RNN), etc. The network structures listed above show strong expression and learning abilities in different tasks.

### 3) Convolutional Neural Network (CNN)

FIG. 5 shows a CNN. As shown in FIG. 5, the basic structure of the CNN may include an input layer, a plurality of convolutional layers, a plurality of pooling layers, a fully connected layer, and an output layer. Each neuron of the convolution kernel in the convolution layer is locally connected with its input, and a local maximum or average feature of a certain layer is extracted by introducing a pooling layer. It is thus possible to effectively reduce the parameters of the network and mine the local features, so that the CNN can converge quickly and obtain excellent performance. In the embodiments of the disclosure, the CNN model replace the DNN model to predict the position information of the terminal.

Specifically, the main characteristic of the CNN model is to utilize the convolutional layer to capture the local features of the input data, and reduce the number of parameters through weight sharing and the pooling layer, which makes it perform well when processing structured data such as images. The convolution layer is the core component of the CNN, and extracts local feature by sliding a convolution kernel (filter) on the input data through a convolution operation, which helps the network to capture spatial structure information in the input. The convolution kernel is a set of weights used to perform convolution operations, which can detect specific features in the input, such as edges and textures. Through training, the network can learn appropriate weights of the convolution kernel. Nonlinear activation functions, such as ReLU, are usually used behind the convolutional layer to introduce the nonlinearity of the network. The pooling layer is used to reduce the spatial dimension of the feature map, reduce the computational burden, and extract more salient features. Common pooling operations include maximum pooling and average pooling. There may be a fully connected layer between the convolutional layer and the output layer for integrating high-level abstract features and connecting to the final output layer. The output layer typically uses the softmax activation function to generate a classification probability distribution, which is used for a classification task.

### 4) Recurrent Neural Network (RNN)

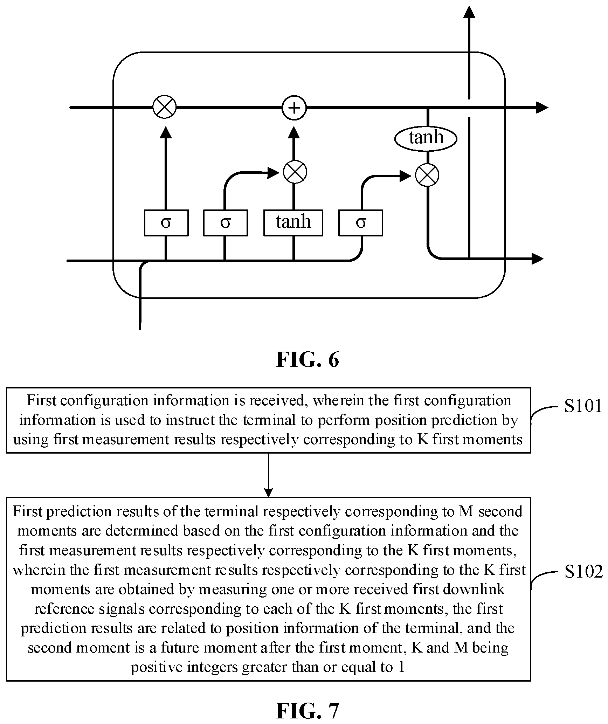

The RNN is a kind of neural network modeling sequence data. It has made remarkable achievements in the fields of natural language processing, such as machine translation and speech recognition. Specifically, the network memorizes information of past moment(s) and uses it in the calculation of the current output, that is, nodes between the hidden layers are no longer unconnected but connected, and the input of the hidden layer includes not only the input layer but also the output of the hidden layer at a previous moment. Common RNNs include Long-Short Term Memory (LSTM) and Gated Recurrent Unit (GRU). A basic LSTM cell structure is shown in FIG 6, which typically uses a nonlinear activation function, such as tanh, to introduce the nonlinearity of the network. Unlike the RNN, which only considers the recent state, the state of LSTM will determine which states should be retained and which states should be forgotten, thus solving defects of traditional RNNs in long-term memory. In the embodiments of the disclosure, similarly, the RNN model replaces the DNN model to predict the position information of the terminal.

Specifically, cyclic connections are included in the RNN model so that previous information can be passed at a current time step to a next time step, and such a structure enables the RNN to process relationships between different time steps. The RNN has a hidden state at each time step, and the hidden state contains information of the past time step, which can be regarded as the memory of the network; and the hidden state is updated at each time step according to the current input and a hidden state of a previous time step. The weights in the RNN are shared at different time steps, which allows the network to process sequences of different lengths. For example, the LSTM architecture and the GRU architecture help to better capture long-term dependencies and improve the performance of the network by introducing gating mechanisms.

### 5) Acquisition of the model

An NN model can be obtained by training through the processes of data set construction, training, validation and testing. In the embodiments of the disclosure, it is assumed that the NN models have been trained in advance by offline training or online training. It should be noted that offline training and online training are not mutually exclusive. For example, the network (NW) may first obtain a static training result through a dataset offline training, and such a process may be referred to as the offline training. During the use of NN by the NW or UE, as the UE further performs measurements and/or reporting, the NN model can continue to collect more data and perform real-time online training to optimize the parameters of the NN model, thus achieving better inference and prediction results.

### 2. Traditional positioning technologies

### 1) In a UE-based positioning method, the terminal directly calculates a position of a target User Equipment (UE).

Specifically, the target UE collects its own measurement data, which may include received signal strength, time difference measurements, angle information, and the like, depending on the available sensors and measurement means. In addition, the target UE may use some assistance information, for example, map data, position information of nearby base stations and/or the like, to improve the accuracy of positioning. The target UE uses the collected measurement data and assistance information to calculate its own position through certain algorithms or models, which can involve signal propagation model, triangulation, Doppler effect and other technologies. The calculated position information is output as a result and used for positioning the target UE. The advantage of UE-based positioning method is that it is decentralized, and the UE can estimate the position independently without excessive network participation.

### 2) UE-assisted/LMF-based positioning method

The UE-assisted/LMF-based positioning method is a cooperative positioning method where a terminal device (or UE) acquires its own position information through measurement data, and then transmits these measurement results to an LMF. The LMF calculates the position of the target UE using the collected measurement results in combination with other information.

Specifically, the UE performs position-related measurements through its own sensors (such as GPS, Wi-Fi signal strength, Bluetooth signal strength, and the like), and records measurement results. The UE reports the measured position-related data to the LMF in the network, for example, transmitting through wireless communication links (such as 4G and 5G networks). The LMF receives and collects measurement data from multiple UEs, such as information that may include the position of the receiving point, signal propagation model, and the like. The LMF uses the collected measurement results and possible assistance information to calculate the position of the target UE through a certain positioning algorithm or model, for example, including collaborative positioning among multiple UEs, because the measurement results of multiple UEs can provide more information. The LMF calculates position information of the target UE, and feeds the result back to the UE or other components requiring the information. The advantage of UE-assisted/LMF-based positioning method is that it combines the information of the UE and network infrastructures, which can improve the accuracy and robustness of terminal positioning.

### 3) NG-RAN (Next Generation Radio Access Network) node assisted positioning method

The NG-RAN node assisted positioning method is a network-assisted positioning method. In this method, the base station (Node) reports the measurement result to the LMF by measuring the information of the Transmission Reception Point (TRP), and then the LMF calculates a position of a target UE based on the collected measurement result.

Specifically, the TRP measures the target UE, which may involve position-related information such as received signal strength, time difference measurement, Doppler effect, etc. The base station reports the position-related data measured by the TRP to the LMF in the network, and this process may be performed via a signaling channel of the network. The LMF receives and summarizes measurement data from multiple TRPs. The data may include information such as the position of the TRP and the signal propagation model. The LMF uses the collected measurement results and possible assistance information to calculate the position of the target UE through certain positioning algorithms or models, such as multi-TRP cooperative positioning, to provide more accurate position information. The LMF calculates the position information of the target UE, and feeds the result back to the corresponding components in the network, which may include the base station, the core network, and the like. The node assisted positioning method can improve the accuracy and reliability of positioning by utilizing the measurement data of multiple TRPs in the network and the information of the network infrastructure.

In the conventional positioning method, the UE or the LMF applies a conventional algorithm, such as a Chan algorithm and Taylor expansion, to estimate the position of the terminal device for different methods. The Chan algorithm is a kind of positioning algorithm used in wireless communication system, which is usually used for positioning based on a Time of Arrival (TOA) of a signal. It calculates the distance by measuring the traveling time of the signal, which is used to estimate the position. The Taylor expansion is a mathematical method that can be used to approximate complex functions. In the field of positioning, the Taylor expansion may be used to map measurement data to a position of a terminal device according to a signal propagation model. The triangulation is a positioning method based on trigonometric principles, and is commonly used in situations based on signal strength or arrival time measured by multiple base stations. By calculating distances of multiple base stations to the terminal device, a position of the device can be calculated using triangulation. The Least Squares is a common mathematical optimization method that can be used to fit models and estimate parameters. In positioning, the least squares method may be used to estimate the position by optimizing the model parameters to fit the observed measurement data. The weighted average method is often used to process multiple measurements, where the weight of each measurement depends on its reliability, which can be used to reduce the effect of noise on the positioning result.

In order to support various positioning methods, the R16 NR introduces a Positioning Reference Signal (PRS) and a Sounding Reference Signal (SRS) for positioning, aiming to support various positioning methods and improve the accuracy and reliability of positioning.

Herein, the PRS is typically transmitted by a base station to User Equipment (UE); and the PRS provides a reference signal on the downlink for assisting the UE in position estimation. The UE may calculate its own position by measuring PRSs from different base stations. The SRS is typically transmitted by the UE to the base station. In scenarios where positioning services are supported, the SRS may be configured to a sounding reference signal for position estimation of the UE. The base station may use the SRS information received from the plurality of UEs to calculate the position of the UE. Specifically, the PRS is a signal introduced in the downlink specifically to support the positioning function. The PRS usually has a special signal structure that makes it easy to identify and process at the receiving end. The terminal device may use the received PRS to perform position measurements, for example, by measuring a TOA or the like. The introduction of the PRS aims to provide an accurate and reliable positioning signal. The SRS is a reference signal for the uplink, while the SRS for positioning is a variant of the SRS specifically for positioning. The terminal device may provide position-related information such as received signal strength, Doppler effect, and the like by transmitting an SRS for positioning. The base station may utilize the information for positioning calculations. The introduction of the SRS for positioning makes it possible for the network to obtain more information about the position from the terminal device, thereby improving the accuracy of positioning.

In order to facilitate understanding of the technical solutions of the embodiments of the disclosure, the technical solutions of the disclosure will be described in detail below with reference to specific examples. As optional solutions, the above related technologies can be arbitrarily combined with the technical solutions of the embodiments of the disclosure, and all combinations thereof belong to the scope of protection of the embodiments of the disclosure. Embodiments of the disclosure include at least some of the following contents.

FIG. 7 is a first schematic flowchart of an optional position prediction method according to an embodiment of the disclosure, which is applied to a terminal. The method includes operations S101 to S102.

In operation S101, first configuration information is received, wherein the first configuration information is used to instruct the terminal to perform position prediction by using first measurement results respectively corresponding to K first moments.

The position prediction method applied to the terminal according to the embodiment of the disclosure can be used to implement the positioning function based on NR, and the interactive scenario mainly involves the following three parts.

### 1) The first part is a terminal (UE).

### 2) The second part is multiple TRPs.

It is to be noted that the TRP hereinafter is also referred to as a second network device, or it may be understood that the TRP is an implementation of the second network device.

In some embodiments, multiple TRPs around the terminal participate in cellular positioning; and one base station may be one TRP, or there may be multiple TRPs under one base station, which is not limited in the disclosure.

In some embodiments, multiple TRPs are distributed in a cellular network covering different geographical areas, and the TRPs may be different base stations, or multiple receiving points under one base station.

### 3) The third part is a location server.

In some embodiments, the location server is a software or logical entity implementing a Location Management Function (LMF) in a network. The location server is responsible for the entire location process, and the location server often includes the LMF.

It is to be noted that the location server or the LMF is also referred to as a first network device hereinafter.

In the embodiment of the disclosure, the position prediction method applied to the terminal is also called a downlink-based positioning method, wherein the downlink-based positioning method is divided into the following two situations.

In a first situation, the method is a terminal-assisted (or UE-assisted) positioning method.

In this case, the terminal device (UE) plays an active role in the positioning process, and the terminal-assisted positioning method mainly includes two main steps: the terminal device is responsible for performing positioning-related measurements, and then reporting the measurement results to the network, and the network side (first network device) calculates position information of the terminal.

Specifically, the terminal device performs measurements by receiving a positioning reference signal (PRS, etc.) from a surrounding base station or a TRP (second network device), and these measurements may include signal strength, Time of Arrival (TOA), Doppler effect, etc. The terminal reports the measurement results to the network, for example, by sending a measurement report or other designated signaling to the base station. After receiving the measurement results reported by the terminal, the base station or the location server uses these results to calculate the position of the terminal device. This process involves the cooperation of multiple measurement points, and uses various positioning algorithms to estimate the terminal position. After the calculation is completed, the network feeds back the obtained position information of the terminal to the terminal device or other related network component(s) for used by subsequent application(s) or service(s).

It should be understood that the terminal-assisted positioning method enables the terminal device to participate more actively in the positioning process, providing more position measurement data, and helping to improve the accuracy and robustness of the positioning. At the same time, it is also necessary to ensure the accuracy and credibility of the measurement results to ensure that the final calculated position information is reliable.

In a second situation, the method is a terminal-based (or UE-based) positioning method.

In this case, the terminal device (UE) performs positioning-related measurements by itself, and then calculates its own position based on these measurements. This method emphasizes the initiative and autonomy of the terminal device.

Specifically, the terminal device performs measurements relating to its own position by receiving a positioning reference signal (PRS, etc.) from a surrounding base station or a TRP, for example, these measurements may include signal strength, Time of Arrival (TOA), Doppler effect, etc. The terminal device uses internal algorithms or models to calculate its position based on the measurement results, which can involve the fusion of multiple measurement points, and uses techniques such as triangulation to estimate its own position. After the terminal device completes the calculation, it obtains its own position information, which can be used by applications or services in various positioning-related scenarios, such as navigation, location services, etc.

It should be understood that the terminal-based positioning method emphasizes the initiative and autonomy of the terminal device in the positioning process, so that the terminal can address diverse positioning requirements with greater flexibility. However, this method also requires the terminal device to have certain computing and measurement capabilities, and to be able to effectively process and fuse multi-source measurement data to obtain accurate position information.

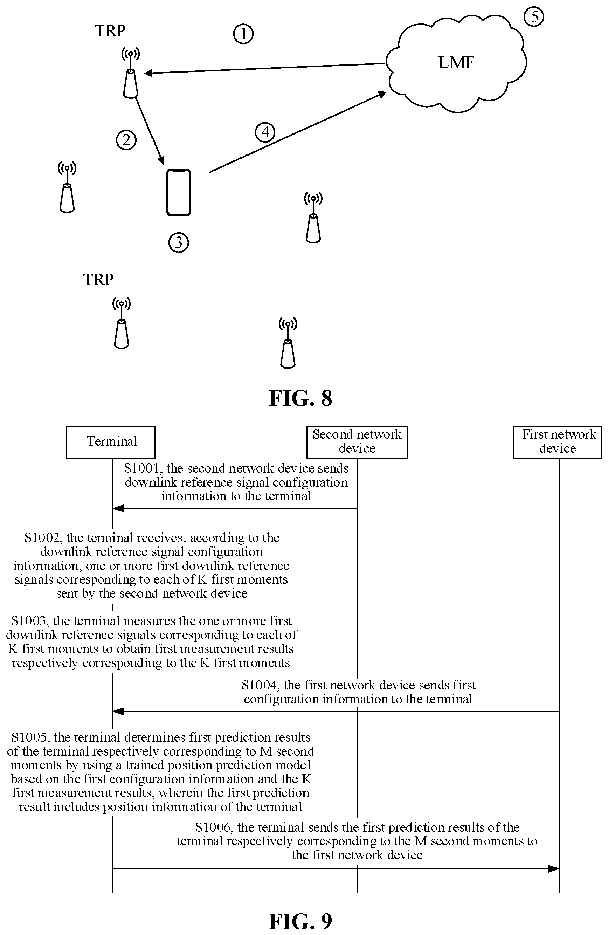

In the embodiment of the disclosure, as shown in FIG. 8, taking a terminal-assisted downlink-based positioning method as an example, an interaction process between a terminal, a first network device (such as LMF), and a second network device (such as TRP) may include operations as follows.

In operation 1, the location server (LMF) notifies the TRP of the relevant configuration.

In some embodiments, the location server notifies the TRP of relevant configuration information (i.e., configuration information). This configuration information may include: the configuration of the Positioning Reference Signal (PRS), and type(s) of measurement results that the terminal needs to report, etc. The purpose of the configuration is to ensure that the network and terminal device use consistent parameters during the positioning process.

In operation 2, the TRP transmits the positioning signal PRS.

In some embodiments, the TRP transmits the PRS to the terminal device according to the configuration of the location server. Herein, the PRS is a signal specially designed for positioning, with special timing and frequency characteristics so that the terminal can identify and measure.

In operation 3, the terminal receives the positioning signal PRS and performs measurement.

In some embodiments, the terminal device receives the PRS transmitted from the TRP. According to the requirements of the positioning method, the terminal performs measurements, which may include measurement of signal strength, measurement of TOA, etc. Different positioning methods may require different types of measurements.

In operation 4, the terminal feeds back the measurement result to the location server.

In some embodiments, the terminal feeds back the measurement results to the location server through the base station, which may be performed by the base station sending a corresponding measurement report or other designated signaling.

In operation 5, the location server calculates position-related information.

In some embodiments, after receiving the measurement results reported by the terminal, the location server uses these results to calculate the position of the terminal device. The process of calculating may include co-processing measurement information of a plurality of TRPs, and estimating the positions of the terminal using a positioning algorithm.

It will be appreciated that in the above process, the location server performs coordination and calculation, while the terminal device is responsible for receiving the positioning signal and providing measurement results. In the whole process, it is necessary to ensure that the communication protocol and configuration between the network and the terminal are consistent to guarantee accurate positioning calculation.

It should be noted that the terminal-assisted downlink-based positioning method is only an example; and for the terminal-based positioning method, the terminal directly calculates position related-information according to the measurement results, and it is not necessary to report the measurement results to the location server for performing the calculation by this network element. That is, since the terminal needs to know the position information corresponding to the TRP, the network needs to notify the terminal (UE) of the position information corresponding to the TRP in advance.

It should be understood that for the terminal-based positioning method, the terminal device (UE) directly calculates position-related information from the measurement results without reporting the measurement result to the location server for further calculation. The advantages of this method are that the terminal device performs position calculation locally, which reduces the dependence on the network and communication overheads.

In the embodiment of the disclosure, the terminal measures one or more first downlink reference signals respectively corresponding to K first moments, which are sent by the second network device, and obtains first measurement results respectively corresponding to the K first moments.

In the embodiment of the disclosure, the first moment may be understood as a historical moment, or one of a series of past moments. Accordingly, the first downlink reference signal can be understood as a downlink reference signal corresponding to the historical moment.

It is to be noted that the first moments include a current moment.

In the embodiment of the disclosure, the second moment may be understood as a future moment, or one of a series of future moments. The second moment is an arbitrary moment after the first moment. Accordingly, a second downlink reference signal can be understood as a downlink reference signal corresponding to the future moment.

In the embodiment of the disclosure, the K first moments correspond to one or more first downlink reference signals. K is a positive integer greater than or equal to 1. Exemplarily, K is 1, 2, 3, and the like.

Exemplarily, the terminal receives one or more first downlink reference signals at a first one of the first moments, the terminal receives one or more first downlink reference signals at a second one of the first moments, and so on, and the terminal receives one or more first downlink reference signals at a k-th one of the first moments.

The first, second, ..., up to k-th one of the first moments correspond to different historical moments. For example, the first one of the first moments is 1:30, the second one of the first moments is 1:40, the third one of the first moments is 1:50, and so on, and the k-th one of the first moments is 2:00.

In addition, the one or more first downlink reference signals received at different first moments are different from one another. For example, one or more first downlink reference signals received by the terminal at the first one of the first moments are different from one or more first downlink reference signals received at the second one of the first moments.

In the embodiment of the disclosure, the M second moments correspond to one or more second downlink reference signals. M is a positive integer greater than or equal to 1. Exemplarily, M is 1, 2, 3, and the like.

Exemplarily, the terminal predicts that one or more second downlink reference signals are received at a first one of the second moments, the terminal predicts that one or more second downlink reference signals are received at a second one of the second moments, and so on, and the terminal predicts that one or more second downlink reference signals are received at an m-th one of the second moments.

The first, second, ..., up to M-th one of the second moments correspond to different future moments. For example, the first one of the second moments is 2:30, the second one of the second moments is 2:40, the third one of the second moments is 2:50, and so on, and the M-th one of the second moments is 3:00.

In addition, the one or more second downlink reference signals which are predicted by the terminal to receive at different second moments are different from one another. For example, one or more second downlink reference signals received by the terminal at the first one of the second moments are different from one or more second downlink reference signals received at the second one of the second moments.

In the embodiment of the disclosure, K first moments respectively correspond to K first measurement results, that is, each first moment corresponds to one first measurement result. The K first measurement results are used to predict position information of the terminal respectively corresponding to the M second times, that is, each second moment corresponds to one piece of position information of the terminal. Here, K and M may be the same or different. Exemplarily, 3 first measurement results respectively corresponding to 3 first moments may be used to predict position information of the terminal respectively corresponding to 6 second moments. The 3 first measurement results respectively corresponding to 3 first moments may also be used to predict position information of the terminal respectively corresponding to 2 second moments. The 3 first measurement results respectively corresponding to 3 first moments may also be used to predict position information of the terminal respectively corresponding to 3 second moments. That is, the terminal predicts the position information of the terminal respectively corresponding to the M second moments according to the comprehensive consideration of the K first measurement results, and there is no absolute quantitative correspondence relationship between the K first measurement results and the position information of the terminal respectively corresponding to the M second moments (that is, M pieces of position information of the terminal).

In operation S102, first prediction results of the terminal respectively corresponding to M second moments are determined based on the first configuration information and the first measurement results respectively corresponding to the K first moments, wherein the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1.

In some embodiments of the disclosure, the position prediction method further includes operations S301 to S302.

In operation S301, first configuration information is acquired, wherein the first configuration information is used to instruct the terminal to perform position prediction by using K first measurement results.

In the embodiment of the disclosure, the terminal receives the first configuration information transmitted by the LMF (first network device).

In the embodiment of the disclosure, the terminal first parses the received first configuration information. This information may include parameters about the prediction model, model type, prediction time interval, etc. According to the parsed information, the terminal configures a corresponding position prediction model, such as an AI/ML-based model, for predicting future terminal position(s) according to the historical measurement results. The terminal uses the configured prediction model in combination with the K first measurement results to perform the position prediction. The predicted result may include information such as position coordinates, speed, direction, and the like of the terminal at a future moment. By utilizing K first measurement results by the terminal, the prediction model can learn the pattern of change of the historical positions, and improve the accuracy of future position(s), which helps to adapt to the position change of the terminal device in different scenarios and moving states. In general, the terminal receives the first configuration information transmitted by the LMF and performs position prediction with K first measurement results, which helps to improve the accuracy and efficiency of position prediction while reducing the dependence on the network.

In some embodiments of the disclosure, the first configuration information includes one or more of: first indication information, second indication information, and third indication information.

The first indication information is used to indicate time configuration information of the M second moments.

The second indication information is used to indicate whether to predict beam information of one or more second downlink reference signals corresponding to each of the M second moments.

The third indication information is used to indicate whether to predict a first probability value of the first prediction result of the terminal corresponding to each of the M second moments.

In the embodiment of the disclosure, the first indication information is used to indicate time configuration information of the M second moments. The first indication information may include: a system frame number, a slot number, a time expressed in UTC, etc. The information provides the terminal with a temporal reference necessary to perform position prediction at future moments. Through the system frame number and the slot number, the terminal can accurately determine the time, and the time expressed in the UTC provides the global standard time information.

In the embodiment of the disclosure, the second indication information is used to indicate whether to predict beam information of one or more second downlink reference signals corresponding to each of the M second moments. If this information is activated, the terminal may need to take into account beam information of the downlink reference signal. The beam information may provide more accurate positioning data, especially in complex wireless environments, and considering beam shape may help improve positioning accuracy.

In the embodiment of the disclosure, the third indication information is used to indicate whether to predict a first probability value of the first prediction result of the terminal corresponding to each of the M second moments. If this information is activated, the terminal may not only predict the position of the terminal, but may also output a probability value of the position prediction. Such a probability value can be used to represent the degree of confidence in the position prediction, helping the network to better consider uncertainty in decision-making.

In the embodiment of the disclosure, the first configuration information may be one of the cases as follows.

Case 1: first indication information;

Case 2: first indication information + second indication information;

Case 3: first indication information + third indication information;

Case 4: First indication information + second indication information + third indication information.

It can be understood that the first indication information provides time configuration information of M second moments, enabling the terminal to perform position prediction at an accurate point in time. The second indication information is used to indicate whether to predict beam information of one or more second downlink reference signals corresponding to each of the M second moments. If this information is activated, the terminal may take into account the beam information of the downlink reference signal, thereby improving the accuracy of position prediction. The third indication information is used to indicate whether to predict a first probability value of the first prediction result of the terminal corresponding to each of the M second moments. This is essential for uncertainty management in the decision-making process of the network. By providing the probability value, the terminal can convey the confidence level regarding the position prediction, helping the network to better understand the reliability of the prediction result. In general, the first configuration information facilitates personalized and accurate position prediction, which improves the adaptability and performance of the system in various scenarios.

In some embodiments of the disclosure, the first indication information includes one or more of:
a number of the M second moments;
an interval of the M second moments;
a system frame number corresponding to each of the M second moments;
a slot number corresponding to each of the M second moments; and
a time expressed in Coordinated Universal Time (UTC) corresponding to each of the M second moments.

In the embodiment of the disclosure, the number of the M second moments represents a number of future moments considered in the position prediction. The value of M determines how many future moments the system will perform position estimation, and a larger value of M often leads to position prediction taken a longer term.

In the embodiment of the disclosure, the interval of the M second moments represents a time span between two adjacent second moments. The selection of the interval demonstrates different requirements in different application scenarios. Shorter intervals may provide more frequent but shorter-term position predictions, while longer intervals may provide longer-term, more stable predictions.

In the embodiment of the disclosure, the system frame number corresponding to each of the M second moments is a key parameter for synchronization and timing. By incorporating the system frame number into the configuration of the position prediction, it is ensured that the position prediction is performed at the correct moment, and synchronized with the timing of the system.

In the embodiment of the disclosure, the slot number corresponding to each of the M second moments is used to further refine the time configuration, especially in a wireless communication system, where the time slot is a basic time unit. Specifying a slot number for each second moment may determine a prediction opportunity more accurately.

In the embodiment of the disclosure, the time expressed in the UTC corresponding to each of the M second moments is a standard time representation, and by associating a prediction time for each second moment with the UTC time, global time synchronization can be ensured, which is particularly critical for communication systems involving multiple time zones.

In the embodiment of the disclosure, the number of the M second moments, the interval of the M second moments, the system frame number corresponding to each of the M second moments, the slot number corresponding to each of the M second moments and the time expressed in the UTC corresponding to each of the M second moments may be in any of the following: integer type, enumeration type, Boolean type, and the like, which is not limited in the embodiment of the disclosure.

It can be understood that, on one hand, increasing the number M can provide longer-term position prediction, enabling the system to plan and adapt to the movement of terminal devices more foresightedly, and is suitable for application scenarios that require advance decision making or resource optimization. On one hand, shortening the interval may provide more frequent but shorter-term position prediction, allowing the system to more flexibly track the dynamic changes of the terminal device. However, this may also result in more frequent communication and more computational loads. On one hand, determining the system frame number helps synchronize different components in the system, ensuring that position prediction takes place at the right time. This is necessary for application scenarios with synchronization requirements to avoid time errors. On one hand, specifying the slot number helps determine the prediction opportunity, enabling the system to accurately plan and perform position prediction. The slot number is critical for communication systems with timing requirements. On one hand, associating with the time expressed in the UTC ensures time synchronization worldwide, which is suitable for international or global application scenarios, as well as communication systems that need to be coordinated in different regions.

It should be understood that reasonable configuration of the above-mentioned first indication information can help the system to more accurately predict the position of the terminal device in the mobile communication environment, thereby improving the quality and effect of the positioning service, and the selection of different parameters needs to be weighed in specific applications to meet the needs of specific scenarios.

In some embodiments of the disclosure, the first configuration information is carried in first positioning request information sent by a first network device. Herein, the first positioning request information is used to indicate that the first network device requests acquisition of position information of the terminal from the terminal.

It should be understood that the first configuration information is carried in the first positioning request information sent by the first network device, the terminal is enabled to acquire the first configuration information for performing position prediction at the same time as receiving the first positioning request information, so that the first measurement results can be more effectively used for calculation in the subsequent position prediction process, thereby improving the accuracy and efficiency of positioning.

In the embodiment of the disclosure, the first positioning request information may be a higher-layer parameter *RequestLocationInformation* in the LPP protocol.

Exemplarily, the first positioning request information may be represented as:

```
SEQUENCE {
 configuration of M future moments, data type 1
 beam information, data type 2, optional
 probability values corresponding to positions at M future moments, data type 3, optional
     }
```

The configuration of M future moments is the first indication information, the beam information is the second indication information, and the probability values corresponding to the positions at M future moments are the third indication information.

In operation S302, first prediction results of the terminal respectively corresponding to M second moments are determined based on the first configuration information and the K first measurement results, wherein the first prediction result is related to position information of the terminal.

In some embodiments of the disclosure, the operation that the first prediction results of the terminal respectively corresponding to M second moments are determined based on the first configuration information and the K first measurement results may include the following operation.

The first prediction results of the terminal respectively corresponding to the M second moments are determined by using a trained position prediction model based on the first configuration information and the K first measurement results, wherein the position prediction model includes a neural network model or a machine learning model.

In the embodiment of the disclosure, the position prediction model may be a neural network model or a machine learning model. Exemplarily, the neural network model may be a DNN model, a CNN model, an RNN model, etc. The machine learning model may be: decision tree, Support Vector Machine (SVM), random forest, etc.

In some embodiments of the disclosure, the first prediction result includes: position information of the terminal, or information of the terminal for estimating a position of the terminal.

In the embodiment of the disclosure, for the position prediction method for which the model (i.e., the position prediction model mentioned above) is deployed on the terminal side, depending on the different outputs (i.e., the first prediction results) of the model, the position prediction method with the model deployed on the terminal side is further divided into two schemes.

A first scheme is direct positioning method based on the terminal-side model (i.e., direct positioning by UE-side model).

A second scheme is assisted positioning method based on the terminal-side model (i.e., assisted positioning by UE-side model).

Specifically, when the position prediction method is the direct positioning method based on the terminal-side model, the first prediction result is the position information of the terminal. When the position prediction method is the assisted positioning method based on the terminal-side model, the first prediction result is information of the terminal for estimating a position of the terminal.

In the embodiment of the disclosure, as shown in FIG. 9, the interaction process of the direct positioning method based on the terminal-side model involves a terminal (UE), a first network device (LMF), and a second network device (gNB), and the method includes operations S1001 to S1006.

In operation S1001, the second network device sends downlink reference signal configuration information to the terminal.

In operation S1002, the terminal receives, according to the downlink reference signal configuration information, one or more first downlink reference signals corresponding to each of K first moments sent by the second network device.

In operation S1003, the terminal measures the one or more first downlink reference signals corresponding to each of K first moments to obtain first measurement results respectively corresponding to the K first moments.

In operation S1004, the first network device sends first configuration information to the terminal.

In operation S1005, the terminal determines first prediction results of the terminal respectively corresponding to M second moments by using a trained position prediction model based on the first configuration information and the K first measurement results, wherein the first prediction result includes position information of the terminal.

In operation S1006, the terminal sends the first prediction results of the terminal respectively corresponding to the M second moments to the first network device.

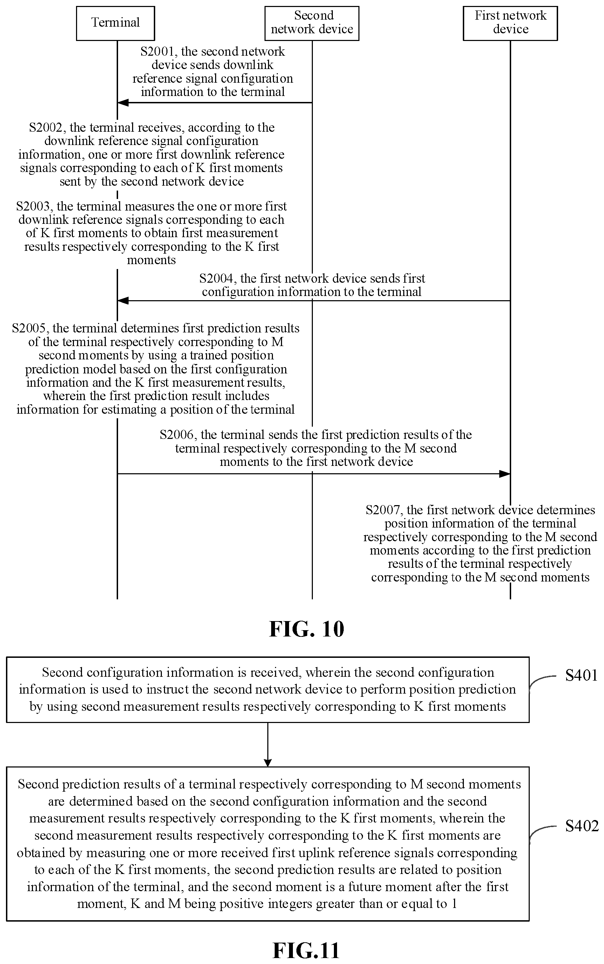

In the embodiment of the disclosure, as shown in FIG. 10, the interaction process of the assisted positioning method based on the terminal-side model involves a terminal (UE), a first network device (LMF), and a second network device (gNB), and the method includes operations S2001 to S2007.

In operation S2001, the second network device sends downlink reference signal configuration information to the terminal.

In operation S2002, the terminal receives, according to the downlink reference signal configuration information, one or more first downlink reference signals corresponding to each of K first moments sent by the second network device.

In operation S2003, the terminal measures the one or more first downlink reference signals corresponding to each of K first moments to obtain first measurement results respectively corresponding to the K first moments.

In operation S2004, the first network device sends first configuration information to the terminal.

In operation S2005, the terminal determines first prediction results of the terminal respectively corresponding to M second moments by using a trained position prediction model based on the first configuration information and the K first measurement results, wherein the first prediction result includes information for estimating a position of the terminal.

In operation S2006, the terminal sends the first prediction results of the terminal respectively corresponding to the M second moments to the first network device.

In operation S2007, the first network device determines position information of the terminal respectively corresponding to the M second moments according to the first prediction results of the terminal respectively corresponding to the M second moments.

It can be seen that a difference between the direct positioning method based on the terminal-side model and the assisted positioning method based on the terminal-side model is that the direct positioning method based on the terminal-side model directly predicts the position information of the terminal corresponding to each of at least two second moments by a position prediction model deployed on the terminal side, and the terminal reports the position information of the terminal corresponding to each of the at least two second moments to the first network device (LMF). The assisted positioning method based on the terminal-side model predicts information for estimating the position of the terminal corresponding to each of at least two second moments by a position prediction model disposed on the terminal side, and the terminal reports information for estimating the position of the terminal corresponding to each of at least two second moments to the first network device (LMF), and the first network device determines the position information of the terminal corresponding to each of at least two second moments according to the received information for estimating the position of the terminal corresponding to each of at least two second moments.

In some embodiments of the disclosure, the information for estimating a position of the terminal includes one or more of:

time difference(s) of one or more second downlink reference signals corresponding to each of the M second moments;

round-trip delay(s) of one or more second downlink reference signals corresponding to each of the M second moments;

Angle(s) of Arrival (AOA) of one or more second downlink reference signals corresponding to each of the M second moments;

Angle(s) of Departure (AOD) of one or more second downlink reference signals corresponding to each of the M second moments;

Reference Signal Received Power (RSRP) of one or more second downlink reference signals corresponding to each of the M second moments;

multipath measurement information of one or more second downlink reference signals corresponding to each of the M second moments; and

Line of Sight (LOS) indication information of one or more second downlink reference signals corresponding to each of the M second moments; and

Time of Arrival (TOA) of one or more second downlink reference signals corresponding to each of the M second moments.

It can be understood that by comprehensively utilizing the above-described information for estimating the position of the terminal, particularly in a complex communication environment, it is helpful to improve the accuracy and reliability of the position estimation of the terminal device.

In some embodiments of the disclosure, the first prediction result further includes:
beam information of one or more second downlink reference signals corresponding to each of the M second moments; and/or,
a first probability value of the first prediction result of the terminal corresponding to each of the M second moments, wherein the first probability value represents a confidence of the first prediction result of the terminal.

In the embodiment of the disclosure, the beam information indicates a direction in which the terminal selects to receive a signal at a certain moment, and the beam information helps to determine the direction of signal transmission and improves the accuracy of position estimation. The first probability value characterizes the confidence of the first prediction result of the terminal location, i.e. a measure of the degree of confidence of the first prediction result. The first probability value is used to quantify the reliability of the first prediction result, provide information about the confidence of the first prediction result, and help to understand the degree of confidence of the position estimation.

In the embodiment of the disclosure, the first prediction result is related to the first configuration information (that is, the first indication information, the second indication information, and the third indication information), and the first prediction result includes the following cases.

In a first case, when the first configuration information includes first indication information, the second indication information indicates that the beam information is to be predicted and the third indication information indicates that the first probability value is to be predicted, the first prediction result is: position information of the terminal or information of the terminal for estimating the position of the terminal, beam information of one or more second downlink reference signals corresponding to each of the M second moments, and a first probability value of the first prediction result of the terminal corresponding to each of the M second moments.

In a second case, when the first configuration information includes first indication information, the second indication information indicates that the beam information is to be predicted and the third indication information indicates that the first probability value is not to be predicted, the first prediction result is: position information of the terminal or information of the terminal for estimating the position of the terminal, and beam information of one or more second downlink reference signals corresponding to each of M second moments.

In a third case, when the first configuration information includes first indication information, the second indication information indicates that the beam information is not to be predicted and the third indication information indicates that the first probability value is not to be predicted, the first prediction result is: position information of the terminal or information of the terminal for estimating the position of the terminal.

In a fourth case, when the first configuration information includes first indication information, the second indication information indicates that the beam information is not to be predicted and the third indication information indicates that the first probability value is to be predicted, the first prediction result is: position information of the terminal or information of the terminal for estimating the position of the terminal, and a first probability value of the first prediction result of the terminal corresponding to each of the M second moments.

It will be appreciated that, on one hand, the beam information helps determine the direction in which the terminal receives the signal, providing position estimation that is more directional, which is very helpful for coping with multipath effects and complex channel environments. By considering the beam direction, the accuracy of the position estimation can be improved, especially in high-density urban environments or with multipath propagation. On one hand, the first probability value provides a measure of confidence of the prediction result. This is critical to understanding the reliability of position estimates, and users and systems can make more informed decisions based on how high or low the probability values are. The first probability value may adjust the use strategy for the position result based on the magnitude of the probability value, ensuring that appropriate action is taken in cases where the position requirements are more stringent or the confidence requirements are higher. Overall, the above additional information enhances the understanding and utilization of the position information by the system, improves the accuracy and reliability of the position estimation, and thus achieves the accurate determination of the terminal position.

In the embodiment of the disclosure, on one hand, by analyzing the measurement results at K first moments, the system can capture timing information and change trends, so as to better understand the motion pattern and position change of the terminal device. On one hand, using the measurement results at first moments, a model or an algorithm may be applied to predict the terminal position(s) at future moment(s) (second moment(s)). This helps to predict the position of the terminal device in advance, and for terminals with high mobility, such prediction can have practical significance in terms of network resource management and service provision. On one hand, by comprehensively considering the measurement results at multiple moments, the accuracy of position prediction can be improved, and the real-time capability may also be improved, making the system more responsive. Generally speaking, by making full use of the measurement results of historical moments for position prediction, it can bring better performance and effect in the positioning system, and improve the understanding and prediction accuracy of terminal device's position.

In some embodiments of the disclosure, the first downlink reference signal includes one or more of:
Positioning Reference Signal (PRS), Synchronization Signal Block (SSB), and Channel State Information-Reference Signal (CSI-RS).

In the embodiment of the disclosure, the PRS is a special signal used for supporting a positioning service, and has special time-domain and frequency-domain structures so that the terminal device can accurately identify and measure it. The SSB is used for the terminal device to synchronize and locate the signals of cells in the network, and it usually includes system information to assist the terminal device to correctly detect and identify cells. The CSI-RS is used to obtain information about the channel state, and helps the terminal device to perform better communication and scheduling.

In the embodiment of the disclosure, the one or more first downlink reference signals received at each first moment may be any one of the PRS, the SSB and the CSI-RS, or may be a combination of multiple ones of the PRS, the SSB and the CSI-RS, which is not limited in the embodiment of the disclosure.

Similarly, in the embodiment of the disclosure, the one or more second downlink reference signals received at each predicted second time that are predicted may be any one of the PRS, the SSB and the CSI-RS, or may be a combination of multiple ones of the PRS, the SSB and the CSI-RS, which is not limited in the embodiment of the disclosure.

It is to be noted that the selection and configuration of the downlink reference signal may be determined according to specific communication standards and system specifications. In a positioning service, the PRS is typically a signal specifically designed to support position measurement. The SSB and the CSI-RS may also be used to provide assistance information to enhance the positioning performance of the terminal device.

It will be appreciated that, on one hand, the PRS is specifically designed to support position measurement, through which the terminal device can perform position estimation, which is important for indoor and outdoor positioning applications. On one hand, the SSB is used by the terminal device to synchronize and locate signals of the cell in the network. Through the synchronization signal, the terminal device can quickly and accurately detect and identify the cell in which it is currently located. On one hand, the CSI-RS provides information about the channel state, helps the terminal device to perform better communication and scheduling, optimize the utilization of network resources and improve the communication quality. On one hand, the SSB typically includes system information that is critical for the terminal device to be properly configured and connected to the network, which further enhances the communication capability of the terminal device with the network. On one hand, using a plurality of reference signals of different types, such as PRS, SSB, and CSI-RS, can improve positioning accuracy and communication quality on the basis of comprehensive consideration of multiple kinds of information.

In some embodiments of the disclosure, the method further includes operations S201 to S202.

In operation S201, downlink reference signal configuration information sent by a second network device is acquired.

In the embodiment of the disclosure, the downlink reference signal configuration information received by the terminal is transmitted by a second network device, and the second network device may be a base station.

In some embodiments of the disclosure, the second network device includes one or more of: a base station device in a cell, a Transmission Reception Point (TRP) in the base station device, and an antenna point in the base station device.

In the embodiment of the disclosure, a base station (gNB) device in a cell is a key device in a wireless communication network, and is responsible for managing communication resources, communicating with terminal devices, and providing services for connecting to the network. The TRP in the base station device is an integral part of the base station device that is responsible for receiving and transmitting communication signals, and it may include devices that transmit and receive signals for transferring data in the network. The AP in the base station device is a key component in a base station device for transmitting and receiving wireless signals, and may include an antenna array or other antenna structure for achieving spatial diversity and improving communication performance.

It can be understood that, on one hand, the base station device provides wider communication coverage and increases communication capacity by deploying APs, which helps to meet the communication needs of different regions and users, and improves network performance. On one hand, the deployment of APs supports multi-antenna technologies, such as MIMO (Multiple Input Multiple Output), which improves signal quality and network throughput, and helps to improve the efficiency and performance of communication systems. On one hand, the TRPs and APs in the base station device play an important role in the positioning system. By sending and receiving downlink reference signals, they support the positioning service of the terminal device and help to provide accurate position information. On one hand, the TRPs and APs in the base station device support network scheduling and resource management through interaction with the core network, which helps to optimize the utilization of network resources and improve the overall efficiency of the communication system.

In the embodiment of the disclosure, the downlink reference signal configuration information is a set of parameters and settings for instructing a terminal device to receive a downlink reference signal in a wireless communication system. Exemplarily, the downlink reference signal configuration information may include one or more of the configures as follows.
1) PRS configuration: specifying activated positioning reference signal sequences and their locations; defining time-domain configuration of the positioning reference signal, which includes time slot, symbol, and the like; and determining frequency-domain configuration of the positioning reference signal, which includes subcarrier, bandwidth, etc.;
2) SSB configuration: determining a position of an SSB, typically in the frequency and time domains; configuring timing characteristics of the SSB, such as time slot, symbol, etc.; and specifying frequency, bandwidth, and other relevant parameters of the SSB;
3) CSI-RS configuration: determining activated CSI-RS sequences and their locations; defining time-domain configuration of the CSI-RS, which includes time slot, symbol, etc.; and determining frequency-domain configuration of the CSI-RS, which includes subcarrier, bandwidth, etc.;
4) beam configuration: specifying a set of activated beams, supporting beamforming techniques; and configuring directivity and other related parameters of the beam;
5) System Frame Number (SFN) configuration: configuring the SFN so that the terminal device correctly parses and tracks the clock of the system; and determining a counting period of the SFN and other clock synchronization related parameters;
6) Time slot configuration: determining time-domain configuration of the time slot, which includes a start time and an end time of the time slot; and specifying frequency-domain configuration of the time slot, such as subcarrier allocation;
7) Time configuration: configuring parameters related to clock synchronization to ensure time synchronization between a terminal device and a base station device, where the time configuration includes algorithms and parameters for clock synchronization;
8) Frequency and bandwidth configuration: specifying an operating frequency range of the downlink signal; and configuring a channel bandwidth for determining a bandwidth for signal transmission;
9) Modulation and Coding Scheme (MCS): determining the modulation scheme and coding scheme of the downlink signal, where the MCS includes modulator type, coding rate and other parameters; and
10) Power configuration: configuring the transmission power of the downlink signal, and including power levels and power control strategies.

It should be noted that the downlink reference signal configuration information listed above is only an example, and other configuration information is also included in an actual application scenario, and the embodiment of the disclosure does not make any limitation thereon.

In an embodiment of the disclosure, the first measurement result includes one or more of:
time delay information of the first downlink reference signal;
phase information of the first downlink reference signal;
power information of the first downlink reference signal;
a Channel Impulse Response (CIR) of the first downlink reference signal;
a Power Delay Profile (PDP) of the first downlink reference signal;
a Delay Profile (DP) of the first downlink reference signal;
Reference Signal Received Power (RSRP) of the first downlink reference signal;
a reference signal reception path power of the first downlink reference signal;
a TOA of the first downlink reference signal; and
an uplink Time Difference of Arrival (TDOA) of the first downlink reference signal.

In the embodiment of the disclosure, the time delay information describes the time required from transmission to reception of the signal, is used to measure the propagation time of signal, and helps the positioning system to estimate a propagation distance of the signal. The phase information describes the phase of the signal, i.e. the position of the waveform, and is used to analyze the waveform characteristics of the signal, providing additional information to the positioning system. The power information describes the power level of the signal and is used to measure the strength of the signal, and estimate the propagation range and path loss of the signal for the positioning system. The CIR describes a response of the channel to the signal. The CIR provides the time domain response information of the channel, which is very important for the positioning system to understand channel propagation characteristics. The PDP describes the power distribution of the signal in different time delays, is used to analyze the distribution of the signal in the time domain, and provides the time domain characteristics to the positioning system. The DP describes the delay distribution of the signal in the time domain, and provides the statistical information of the signal delay, which is very useful for the positioning system to perform delay analysis. The RSRP describes the power level of the received reference signal, which is used to measure the strength of the received reference signal, and estimate the propagation distance and path loss of the signal for the positioning system. The reference signal reception path power describes the power of the reference signal on the reception path, which is used to provide power information about the signal reception path, and is important for the positioning system to understand the channel characteristics. The TOA describes the time at which a signal reaches the receiving end, which is used to provide information about the time of arrival of the signal, and is useful for timing analysis of a positioning system. The uplink TDOA describes a time difference of a TOA of the uplink signal relative to the downlink signal, which is used for measuring a time relationship of the TOA of the uplink signal relative to the downlink signal, and is used by the positioning system to perform time difference measurement.

It will be appreciated that a variety of signal characteristics such as time delay, phase, power, etc. are included in the first measurement result. Through the analysis of these characteristics, the change of signal in the process of propagation can be understood more comprehensively so as to provide more reference information for the positioning system.

In operation S202, one or more first downlink reference signals corresponding to each of K first moments sent by the second network device are received according to the downlink reference signal configuration information.

In the embodiment of the disclosure, according to the downlink reference signal configuration information, the terminal may receive, according to configured parameters and settings, one or more first downlink reference signals corresponding to each of K first moments sent by the second network device.

In the embodiment of the disclosure, the terminal obtains downlink reference signal configuration information through the system broadcast message or other signaling methods, where the configuration information includes configuration of the PRS, SSB, CSI-RS, etc. The terminal parses the received downlink reference signal configuration information to understand which reference signal sequences are activated, their time and frequency domain configurations, and other relevant parameters. The terminal prepares to receive the first downlink reference signal according to the parsed configuration information, and the process involves operations such as configuring receiver parameters and setting a receiving window. At the configured moments, the terminal receives one or more first downlink reference signals corresponding to each of the K first moments transmitted by the second network device, and these downlink reference signals may include a PRS for positioning, an SSB for synchronization, or the like. The terminal measures the received reference signal, which may include measurement of delay, signal quality, etc.

Exemplarily, a manner by which the base station (second network device) sends the downlink reference signal configuration information to the terminal includes any of: broadcast signaling, system message, RRC connection establishment procedure, and physical layer broadcast.
1) As to the broadcast signaling, the base station may broadcast system information, which includes downlink reference signal configuration information, to surrounding terminals through the broadcast signaling.
2) As to the system message, the base station includes downlink reference signal configuration information in the system message, and the system message can be broadcast to the terminal in a periodic manner, and the terminal obtains the downlink reference signal configuration information by listening to these system messages.
3) As to the RRC connection establishment procedure, during the RRC connection establishment, the base station may transmit downlink reference signal configuration information to the terminal. When the RRC connection is established, the signaling interaction between the base station and the terminal may include the transfer of configuration information.
4) As to the physical layer broadcast, the base station may broadcast some basic configuration information to the terminal using a physical layer broadcast channel (e.g., PBCH (Physical Broadcast Channel)), and the basic configuration information may include configuration information of a downlink reference signal.

It should be noted that the above-mentioned manner by which the base station sends downlink reference signal configuration information to the terminal is only an example, and can be selected in an actual application scenario. The specific implementation depends on the standard and protocol of the communication system, and the embodiment of the disclosure does not make any limitation thereon.

In the embodiment of the disclosure, the terminal firstly parses the received downlink reference signal configuration information to understand which reference signal sequences are activated, their time and frequency domain configurations, other relevant parameters. According to the parsed configuration information, the terminal configures the relevant parameters of the receiver, including but not limited to receiving frequency, time slot structure, time-domain configuration of the receiving window, and the like. At configured moment(s), the terminal starts receiving one or more first downlink reference signals corresponding to each of the K first moments transmitted by the second network device. These reference signals may include a PRS for positioning, an SSB for synchronization, and the like. The terminal measures the received reference signal, and obtains a first measurement result corresponding to at least one first moment, such as measurement of delay, signal quality, and the like.

It should be understood that by the above-described process, the terminal can effectively receive and process one or more first downlink reference signals corresponding to each of the K first moments transmitted by the second network device, providing the network with information necessary for positioning, synchronization, and communication. The above process may vary depending on the standards and protocols of the communication system.

In some embodiments of the disclosure, input data of the position prediction model includes:
K first measurement results; or
the first configuration information and the K first measurement results; or
the K first measurement results and first assistance information; or
the first configuration information, the K first measurement results, and the first assistance information.

In the embodiment of the disclosure, when the input data is the K first measurement results, by using only K first measurement results, the position prediction model may attempt to directly learn and infer the position information of the terminal from the existing measurement data. At this time, the terminal may determine the first prediction result corresponding to each of the second moments from the output data of the model based on the first configuration information.

In the embodiment of the disclosure, the terminal may assign different weights in chronological order according to the first measurement results respectively corresponding to the K first moments. For example, a smaller weight (e.g., 0.1) may be assigned to a first measurement result corresponding to an earlier first moment (i.e., a moment away from the second moment), and a larger weight (e.g., 0.5) may be assigned to a first measurement result corresponding to a later first moment (i.e., a moment close to the second moment).

In the embodiment of the disclosure, when the input data is the first configuration information and the K first measurement results, the first configuration information introduces time configuration regarding the second moments, so that the model can take into account the timing information. This helps predict future positions more accurately.

In the embodiment of the disclosure, when the input data is the K first measurement results and the first assistance information, the first assistance information may contain a description of an environment, a network condition, or other context, providing more background information for position prediction, and helping the model to better understand and process position changes under different conditions.

In the embodiment of the disclosure, when the input data is the first configuration information, the K first measurement results and the first assistance information, all the information is combined together, the model can learn from multi-dimensional data encompassing timing, location measurements and additional context, thereby improving the accuracy of the terminal position.

It can be understood that by using these different input combinations flexibly, the position prediction model can more comprehensively consider multiple factors to better predict the position of the terminal, and this diversity helps to adapt to different positioning scenarios and network conditions.

In some embodiments of the disclosure, the first assistance information includes one or more of:
index(es) of one or more first downlink reference signals corresponding to each of the K first moments;
timestamp information of one or more first downlink reference signals corresponding to each of the K first moments;
timestamp information of the first measurement result corresponding to each of the K first moments;
beam information of one or more first downlink reference signals corresponding to each of the K first moments; and
speed information of the terminal corresponding to each of the K first moments.

In the embodiment of the disclosure, the index(es) of one or more first downlink reference signals corresponding to each of the K first moments include a unique identifier of each first downlink reference signal, which is used to distinguish and identify different first downlink reference signals, ensuring that the model can distinguish the measurement results of different signals.

In the embodiment of the disclosure, the timestamp information of one or more first downlink reference signals corresponding to each of the K first moments includes a specific time of the measurement moment of each first downlink reference signal, and is used to provide timing information to help the model understand the change of position information over time.

In the embodiment of the disclosure, the timestamp information of the first measurement result corresponding to each of the K first times includes time information generated by each first measurement result, which can help the model to model timing characteristics.

In the embodiment of the disclosure, the beam information of one or more first downlink reference signals corresponding to each of the K first moments includes the beam information of each first downlink reference signal, such as the propagation direction of the signal, and is used to provide additional environmental information, which helps the model to more accurately understand the signal propagation path.

In the embodiment of the disclosure, the beam information of one or more first downlink reference signals corresponding to each of the K first moments includes beam information of each first downlink reference signal, such as propagation distance, path loss and other information, and is used to provide detailed information about the signal propagation environment for the model to perform more accurate position prediction.

In the embodiment of the disclosure, the speed information of the terminal corresponding to each of the K first moments includes speed information of the terminal corresponding to each first moment, which helps the model to better adapt to the position change of the mobile terminal.

It can be understood that the comprehensive usage of the above-mentioned first assistance information enables the model to more comprehensively understand and predict the position, enhances the ability of the model to model the spatiotemporal relationship, and improves the accuracy and robustness of the position prediction.

In some embodiments of the disclosure, the beam information of the first downlink reference signal includes one or more of:
a joint Transmission Configuration Indicator (TCI) state of the first downlink reference signal;
a Quasi Co-Location (QCL) type of the first downlink reference signal; and
a spatial reception filter of the first downlink reference signal.

In the embodiment of the disclosure, the joint TCI state is used to describe the joint transmission configuration state of the reference signal, the joint transmission configuration may involve a plurality of transmission configurations, and the TCI state provides information about these configurations, which helps the terminal to understand and decode the reference signal.

In the embodiment of the disclosure, the QCL type is used to describe the relative position relationship between a group of transmitting antennas and receiving antennas, and the QCL type provides geometric information about the signal propagation path, which helps the terminal to perform more accurate position estimation.

In the embodiment of the disclosure, the spatial reception filter is used to describe a filtering operation of the signal performed by the receiving end, the filter affects the reception quality of the signal, and the spatial reception filter information helps the terminal to better understand the characteristics of the received signal.

It will be appreciated that the beam information enumerated above provides specific details regarding transmission and reception of the reference signal, helping the terminal and the network to better understand the characteristics and environmental conditions of the signals, thereby improving the accuracy of position prediction.

In some embodiments of the disclosure, according to the direct positioning method based on the terminal-side model and the assisted positioning method based on the terminal-side model, the terminal transmits the first prediction result of the terminal corresponding to each of the M second moments to the first network device. Correspondingly, the first network device receives the first prediction result of the terminal corresponding to each of the M second moments transmitted by the terminal.

In the embodiment of the disclosure, when the first prediction result of the terminal corresponding to each of the M second moments transmitted by the terminal and received by the first network device is the information for estimating the position of the terminal, the first network device determines the position information of the terminal corresponding to each of the M second moments based on the information for estimating the position of the terminal of the terminal corresponding to each of the M second moment.

In the direct positioning method based on the terminal-side model, the first prediction result of the terminal corresponding to each of the M second moments reported by the terminal to the first network device includes at least position information of the terminal corresponding to each of the M second moments. In the assisted positioning method based on the terminal-side model, the first prediction result of the terminal corresponding to each of the M second moments reported by the terminal to the first network device includes at least information for estimating the position of the terminal of the terminal corresponding to each of the M second moments. On this basis, according to the first configuration information transmitted by the first network device to the terminal, the first prediction result of the terminal corresponding to each of the M second moments may further include: beam information of one or more second downlink reference signals corresponding to each of the M second moments; and/or a first probability value of the first prediction result of the terminal corresponding to each of the M second moments.

In some embodiments of the disclosure, the first prediction results of the terminal respectively corresponding to the M second moments are carried in first positioning response information. Herein, the first positioning response information is used to indicate that the terminal allows the first network device to acquire position information of the terminal.

In the embodiment of the disclosure, the terminal transmits first positioning response information to the first network device, and the first positioning response information carries first prediction results of the terminal respectively corresponding to M second moments. Correspondingly, the first network device receives the first positioning response information, and parses the first positioning response information, thereby obtaining the first prediction result of the terminal corresponding to each of the M second moments.

In the embodiment of the disclosure, the first positioning response information may be a high-layer parameter *ProvideLocationInformation* in the LPP protocol.

Exemplarily, the first positioning response information may be represented as:

```
  SEQUENCE {
 configuration of M future moments, data type 1
 moment information corresponding to position coordinate 1
 position coordinate 1
 beam information 1, data type 2, optional
 probability value corresponding to position coordinate 1, data type 3, optional
 ...
       }
```

In the embodiment of the disclosure, a position prediction method is provided that applied to the terminal. On one hand, by analyzing the measurement results at K first moments, the system can capture timing information and change trends, so as to better understand the motion pattern and position change of the terminal device. On one hand, using the measurement results at first moments, a model or an algorithm may be applied to predict the terminal position(s) at future moment(s) (second moment(s)). This helps to predict the position of the terminal device in advance, and for terminals with high mobility, such prediction can have practical significance in terms of network resource management and service provision. On one hand, by comprehensively considering the measurement results at multiple moments, the accuracy of position prediction can be improved, and the real-time capability may also be improved, making the system more responsive. Generally speaking, by making full use of the measurement results of historical moments for position prediction, it can bring better performance and effect in the positioning system, and improve the understanding and prediction accuracy of terminal device's position.

FIG. 11 is a second schematic flowchart of an optional position prediction method according to an embodiment of the disclosure, which is applied to a second network device. The method includes operations S401 to S402.

In operation S401, second configuration information is received, wherein the second configuration information is used to instruct the second network device to perform position prediction by using second measurement results respectively corresponding to K first moments.

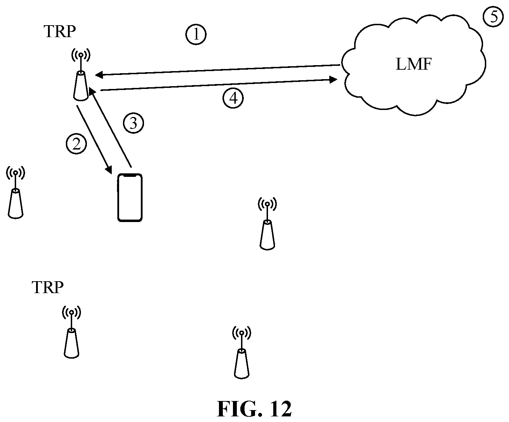

In the embodiment of the disclosure, the position prediction method applied to the second network device is also referred to as an uplink-based positioning method, and as shown in FIG. 12, the interaction process between the terminal, the first network device (such as LMF), and the second network device (such as TRP) may include operations as follows.

In operation 1, the location server notifies the TRP of the relevant configuration.

In some embodiments, the location server notifies the TRP of relevant configuration information (including relevant parameters of a Sounding Reference Signal (SRS), such as configuration frequency, time domain settings, etc.). This configuration information may include: the configuration of the SRS, and type(s) of measurement results that the terminal needs to report, etc. The purpose of the configuration is to ensure that the network and terminal device use consistent parameters during the positioning process.

In operation 2, the base station sends related signaling to the terminal.

In some embodiments, the base station informs the terminal device to perform positioning measurements using the SRS, which may include configuration parameters for the SRS, such as transmission opportunity, frequency, time-domain resources and the like of the SRS.

In operation 3, the terminal transmits an uplink reference signal (SRS for positioning) according to the signaling.

In some embodiments, the terminal device starts transmitting an uplink reference signal at a predetermined time and frequency according to the signaled configuration of the base station.

In operation 4, the TRP measures the uplink reference signal (for example, measurement of signal strength, time delay, etc.), and sends the measurement result to the location server.

In operation 5, the location server calculates position-related information.

In some embodiments, the location server performs a position calculation algorithm to estimate position information of the terminal device using the SRS measurement data.

It will be appreciated that in the above process, the location server performs coordination and calculation, whereas the TRP (second network device) is responsible for receiving the positioning the SRS and providing measurement results. In the whole process, it is necessary to ensure that the communication protocol and configuration between the network and the second network device are consistent to guarantee accurate positioning calculation.

In the embodiment of the disclosure, the second network device acquires second measurement results obtained by measuring the one or more first uplink reference signals corresponding to each of K first moments.

In the embodiment of the disclosure, the first moment may be understood as a historical moment, or one of a series of past moments. Accordingly, the first uplink reference signal can be understood as an uplink reference signal corresponding to the historical moment.

In the embodiment of the disclosure, the second moment may be understood as a future moment, or one of a series of future moments. The second moment is an arbitrary moment after the first moment. Accordingly, a second uplink reference signal can be understood as an uplink reference signal corresponding to the future moment.

In the embodiment of the disclosure, the K first moments correspond to one or more first uplink reference signals. K is a positive integer greater than or equal to 1. Exemplarily, K is 1, 2, 3, and the like.

Exemplarily, the terminal receives one or more first uplink reference signals at a first one of the first moments, the terminal receives one or more first uplink reference signals at a second one of the first moments, and so on, and the terminal receives one or more first uplink reference signals at a k-th one of the first moments.

The first, second, ..., up to k-th one of the first moments correspond to different historical moments. For example, the first one of the first moments is 1:30, the second one of the first moments is 1:40, the third one of the first moments is 1:50, and so on, and the k-th one of the first moments is 2:00.

In addition, the one or more first uplink reference signals received at different first moments are different from one another. For example, one or more first uplink reference signals received by the terminal at the first one of the first moments are different from one or more first uplink reference signals received at the second one of the first moments.

In the embodiment of the disclosure, the M second moments correspond to one or more second uplink reference signals. M is a positive integer greater than or equal to 1. Exemplarily, M is 1, 2, 3, and the like.

Exemplarily, the terminal predicts that one or more second uplink reference signals are received at a first one of the second moments, the terminal predicts that one or more second uplink reference signals are received at a second one of the second moments, and so on, and the terminal predicts that one or more second uplink reference signals are received at an m-th one of the second moments.

The first, second, ..., up to M-th one of the second moments correspond to different future moments. For example, the first one of the second moments is 2:30, the second one of the second moments is 2:40, the third one of the second moments is 2:50, and so on, and the M-th one of the second moments is 3:00.

In addition, the one or more second uplink reference signals which are predicted by the terminal to receive at different second moments are different from one another. For example, one or more second uplink reference signals received by the terminal at the first one of the second moments are different from one or more second uplink reference signals received at the second one of the second moments.

In operation S402, second prediction results of a terminal respectively corresponding to M second moments are determined based on the second configuration information and the second measurement results respectively corresponding to the K first moments, wherein the second measurement results respectively corresponding to the K first moments are obtained by measuring one or more received first uplink reference signals corresponding to each of the K first moments, the second prediction results are related to position information of the terminal, and the second moment is a future moment after the first moment, K and M being positive integers greater than or equal to 1.

In some embodiments of the disclosure, the method further includes operations S501 to S502.

In operation S501, second configuration information is acquired, wherein the second configuration information is used to instruct the terminal to perform position prediction by using K second measurement results.

In the embodiment of the disclosure, the second network device receives the second configuration information transmitted by the LMF (first network device).

In the embodiment of the disclosure, the second network device firstly parses the received second configuration information. This information may include parameters about the prediction model, model type, prediction time interval, etc. According to the parsed information, the terminal configures a corresponding position prediction model, such as an AI/ML-based model, for predicting future terminal position(s) according to the historical measurement results. The second network device uses the configured prediction model in combination with the K first measurement results to perform the position prediction. The predicted result may include information such as position coordinates, speed, direction, and the like of the terminal at a future moment. By utilizing K second measurement results by the second network device, the prediction model can learn the pattern of change of the historical positions, and improve the accuracy of future position(s), which helps to adapt to the position change of the terminal device in different scenarios and moving states. In general, the second network device receives the second configuration information transmitted by the LMF and performs position prediction with K second measurement results, which helps to improve the accuracy and efficiency of position prediction.

In some embodiments of the disclosure, the second configuration information includes one or more of: fourth indication information, fifth indication information, and sixth indication information.

The fourth indication information is used to indicate time configuration information of the M second moments.

The fifth indication information is used to indicate whether to predict beam information of one or more second uplink reference signals corresponding to each of the M second moments.

The sixth indication information is used to indicate whether to predict a second probability value of the second prediction result of the terminal corresponding to each of the M second moments.

In the embodiment of the disclosure, the fourth indication information is used to indicate time configuration information of the M second moments. The first indication information may include: a system frame number, a slot number, a time expressed in UTC, etc. The information provides the terminal with a temporal reference necessary to perform position prediction at future moments. Through the system frame number and the slot number, the terminal can accurately determine the time, and the time expressed in the UTC provides the global standard time information.

In the embodiment of the disclosure, the fifth indication information is used to indicate whether to predict beam information of one or more second uplink reference signals corresponding to each of the M second moments. If this information is activated, the second network device may need to take into account beam information of the uplink reference signal. The beam information may provide more accurate positioning data, especially in complex wireless environments, and considering beam shape may help improve positioning accuracy.

In the embodiment of the disclosure, the sixth indication information is used to indicate whether to predict a first probability value of the first prediction result of the terminal corresponding to each of the M second moments. If this information is activated, the second network device may not only predict the position of the terminal, but may also output a probability value of the position prediction. Such a probability value can be used to represent the degree of confidence in the position prediction, helping the network to better consider uncertainty in decision-making.

In the embodiment of the disclosure, the second configuration information may be one of the cases as follows.
Case 1: fourth indication information;
Case 2: fourth indication information + fifth indication information;
Case 3: fourth indication information + sixth indication information;
Case 4: fourth indication information + fifth indication information + sixth indication information.

It can be understood that the fourth indication information provides time configuration information of M second moments, enabling the second network device to perform position prediction at an accurate point in time. The fifth indication information is used to indicate whether to predict beam information of one or more second uplink reference signals corresponding to each of the M second moments. If this information is activated, the second network device may take into account the beam information of the uplink reference signal, thereby improving the accuracy of position prediction. The sixth indication information is used to indicate whether to predict a second probability value of the second prediction result of the terminal corresponding to each of the M second moments. This is essential for uncertainty management in the decision-making process of the network. By providing the probability value, the second network device can convey the confidence level regarding the position prediction, helping the network to better understand the reliability of the prediction result. In general, the second configuration information facilitates personalized and accurate position prediction, which improves the adaptability and performance of the system in various scenarios.

In some embodiments of the disclosure, the fourth indication information includes one or more of:
a number of the M second moments;
an interval of the M second moments;
a system frame number corresponding to each of the M second moments;
a slot number corresponding to each of the M second moments; and
a time expressed in Coordinated Universal Time (UTC) corresponding to each of the M second moments.

In the embodiment of the disclosure, for the related explanation of the fourth indication information, reference can be made to the description above, which will not be described again herein.

In the embodiment of the disclosure, the second configuration information is carried in second positioning request information sent by a first network device. Herein, the second positioning request information is used to indicate that the first network device requests acquisition of position information of the terminal from the second network device.

It should be understood that the second configuration information is carried in the second positioning request information sent by the first network device, the second network device is enabled to acquire the second configuration information for performing position prediction at the same time as receiving the second positioning request information, so that the second measurement results can be more effectively used for calculation in the subsequent position prediction process, thereby improving the accuracy and efficiency of positioning.

It is to be noted that the second positioning request information may be a higher-layer parameter RequestLocationInformation in the LPP protocol.

In operation S502, second prediction results of the terminal respectively corresponding to M second moments are determined based on the second configuration information and the K second measurement results, wherein the second prediction result includes information for estimating a position of the terminal.

In some embodiments, the second network device determines the second prediction results of the terminal respectively corresponding to the M second moments by using a trained position prediction model based on the second configuration information and the K second measurement results. Herein, the position prediction model includes a neural network model or a machine learning model.

In the embodiment of the disclosure, the position prediction model may be a neural network model or a machine learning model. Exemplarily, the neural network model may be a DNN model, a CNN model, an RNN model, etc. The machine learning model may be: decision tree, Support Vector Machine (SVM), random forest, etc.

In the embodiment of the disclosure, for the position prediction method in which the model (that is, the position prediction model mentioned above) is deployed on the second network device side, the output of the model may be one or more pieces of information for estimating the position of the terminal corresponding to each of the M second moments.

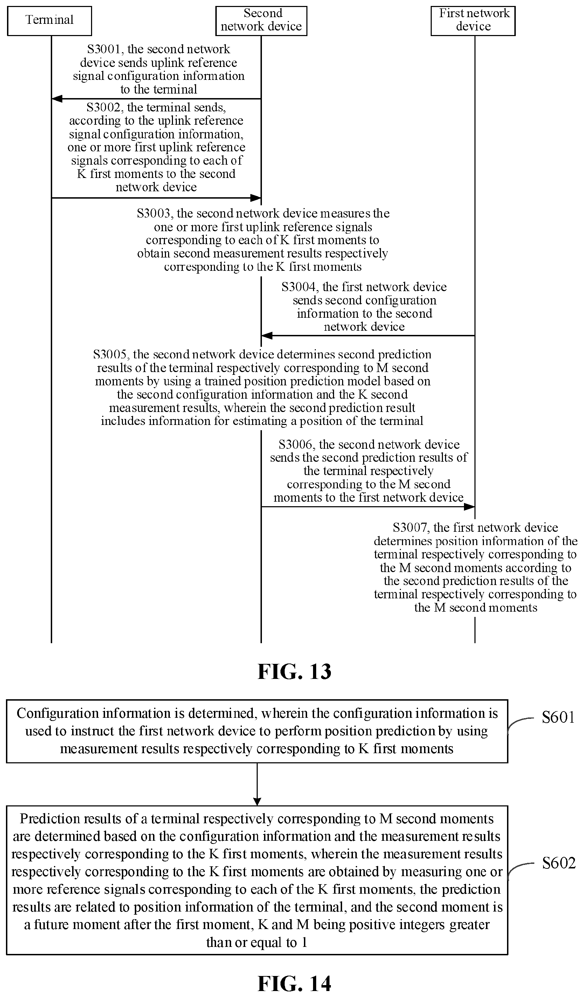

In the embodiment of the disclosure, as shown in FIG. 13, the interaction process of the assisted positioning method based on the model of the second network device involves a terminal (UE), a first network device (LMF), and a second network device (gNB), and the method includes operations S3001 to S3007.

In operation S3001, the second network device sends uplink reference signal configuration information to the terminal.

In operation S3002, the terminal sends, according to the uplink reference signal configuration information, one or more first uplink reference signals corresponding to each of K first moments to the second network device.

In operation S3003, the second network device measures the one or more first uplink reference signals corresponding to each of K first moments to obtain second measurement results respectively corresponding to the K first moments.

In operation S3004, the first network device sends second configuration information to the second network device.

In operation S3005, the second network device determines second prediction results of the terminal respectively corresponding to M second moments by using a trained position prediction model based on the second configuration information and the K second measurement results, wherein the second prediction result includes information for estimating a position of the terminal.

In operation S3006, the second network device sends the second prediction results of the terminal respectively corresponding to the M second moments to the first network device.

In operation S3007, the first network device determines position information of the terminal respectively corresponding to the M second moments according to the second prediction results of the terminal respectively corresponding to the M second moments.

In some embodiments of the disclosure, the method may further include: one or more first uplink reference signals corresponding to each of the K first moments sent by the terminal according to uplink reference signal configuration information are received.

In the embodiment of the disclosure, the terminal transmits one or more first uplink reference signals corresponding to each of the K first moments to the second network device, according to the uplink reference signal configuration information sent by the first network device. Correspondingly, the second network device receives one or more first uplink reference signals corresponding to each of the K first moments.

In the embodiment of the disclosure, the uplink reference signal configuration information is a set of parameters and settings for instructing a terminal device to transmit an uplink reference signal in a wireless communication system.

In the embodiment of the disclosure, K first moments respectively correspond to K first measurement results, that is, each first moment corresponds to one first measurement result. The K first measurement results are used to predict position information of the terminal respectively corresponding to the M second times, that is, each second moment corresponds to one piece of position information of the terminal. Here, K and M may be the same or different. Exemplarily, 3 first measurement results respectively corresponding to 3 first moments may be used to predict position information of the terminal respectively corresponding to 6 second moments. The 3 first measurement results respectively corresponding to 3 first moments may also be used to predict position information of the terminal respectively corresponding to 2 second moments. The 3 first measurement results respectively corresponding to 3 first moments may also be used to predict position information of the terminal respectively corresponding to 3 second moments. That is, the terminal predicts the position information of the terminal respectively corresponding to the M second moments according to the comprehensive consideration of the K first measurement results, and there is no absolute quantitative correspondence relationship between the K first measurement results and the position information of the terminal respectively corresponding to the M second moments (that is, M pieces of position information of the terminal).

In some embodiments of the disclosure, the second measurement result includes one or more of:
time delay information of the first uplink reference signal;
phase information of the first uplink reference signal;
power information of the first uplink reference signal;
a Channel Impulse Response (CIR) of the first uplink reference signal;
a Power Delay Profile (PDP) of the first uplink reference signal;
a Delay Profile (DP) of the first uplink reference signal;
RSRP of the first uplink reference signal;
a reference signal reception path power of the first uplink reference signal;
a Time of Arrival (TOA) of the first uplink reference signal; and
an uplink Time Difference of Arrival (TDOA) of the first uplink reference signal.

In the embodiment of the disclosure, on one hand, by analyzing the measurement results at K first moments, the system can capture timing information and change trends, so as to better understand the motion pattern and position change of the terminal device. On one hand, using the measurement results at first moments, a model or an algorithm may be applied to predict the terminal position(s) at future moment(s) (second moment(s)). This helps to predict the position of the terminal device in advance, and for terminals with high mobility, such prediction can have practical significance in terms of network resource management and service provision. On one hand, by comprehensively considering the measurement results at multiple moments, the accuracy of position prediction can be improved, and the real-time capability may also be improved, making the system more responsive. Generally speaking, by making full use of the measurement results of historical moments for position prediction, it can bring better performance and effect in the positioning system, and improve the understanding and prediction accuracy of terminal device's position.

In some embodiments of the disclosure, the first uplink reference signal includes Sounding Reference Signal (SRS).

In some embodiments of the disclosure, the information for estimating a position of the terminal includes one or more of:
time difference(s) of one or more second uplink reference signals corresponding to each of the M second moments;
round-trip delay(s) of one or more second uplink reference signals corresponding to each of the M second moments;
Angle(s) of Arrival (AOA) of one or more second uplink reference signals corresponding to each of the M second moments;
Angle(s) of Departure (AOD) of one or more second uplink reference signals corresponding to each of the M second moments;
Reference Signal Received Power (RSRP) of one or more second uplink reference signals corresponding to each of the M second moments;
multipath measurement information of one or more second uplink reference signals corresponding to each of the M second moments; and
Line of Sight (LOS) indication information of one or more second uplink reference signals corresponding to each of the M second moments.

It can be understood that by comprehensively utilizing the above-described information for estimating the position of the terminal, particularly in a complex communication environment, it is helpful to improve the accuracy and reliability of the position estimation of the terminal device.

In some embodiments of the disclosure, the second prediction result further includes:
beam information of one or more second uplink reference signals corresponding to each of the M second moments; and/or,
a second probability value of the second prediction result of the terminal corresponding to each of the M second moments, wherein the second probability value represents a confidence of the second prediction result of the terminal.

In the embodiment of the disclosure, the beam information indicates a direction in which the terminal selects to receive a signal at a certain moment, and the beam information helps to determine the direction of signal transmission and improves the accuracy of position estimation. The second probability value characterizes the confidence of the second prediction result of the terminal location, i.e. a measure of the degree of confidence of the second prediction result. The second probability value is used to quantify the reliability of the second prediction result, provide information about the confidence of the second prediction result, and help to understand the degree of confidence of the position estimation.

In the embodiment of the disclosure, the second prediction result is related to the second configuration information (that is, the fourth indication information, the fifth indication information, and the sixth indication information), and the second prediction result includes the following cases.

In a first case, when the second configuration information includes the fourth indication information, the fifth indication information indicates that the beam information is to be predicted and the sixth indication information indicates that the first probability value is to be predicted, the second prediction result is: information of the terminal for estimating the position of the terminal, beam information of one or more second uplink reference signals corresponding to each of the M second moments, and a second probability value of the second prediction result of the terminal corresponding to each of the M second moments.

In a second case, when the second configuration information includes the fourth indication information, the fifth indication information indicates that the beam information is to be predicted and the sixth indication information indicates that the first probability value is not to be predicted, the second prediction result is: information of the terminal for estimating the position of the terminal, and beam information of one or more second uplink reference signals corresponding to each of M second moments.

In a third case, when the second configuration information includes the fourth indication information, the fifth indication information indicates that the beam information is not to be predicted and the sixth indication information indicates that the first probability value is not to be predicted, the second prediction result is: information of the terminal for estimating the position of the terminal.

In a fourth case, when the second configuration information includes the fourth indication information, the fifth indication information indicates that the beam information is not to be predicted and the sixth indication information indicates that the first probability value is to be predicted, the second prediction result is: information of the terminal for estimating the position of the terminal, and a second probability value of the second prediction result of the terminal corresponding to each of the M second moments.

It will be appreciated that, on one hand, the beam information helps determine the direction in which the terminal receives the signal, providing position estimation that is more directional, which is very helpful for coping with multipath effects and complex channel environments. By considering the beam direction, the accuracy of the position estimation can be improved, especially in high-density urban environments or with multipath propagation. On one hand, the second probability value provides a measure of confidence of the prediction result. This is critical to understanding the reliability of position estimates, and users and systems can make more informed decisions based on how high or low the probability values are. The second probability value may adjust the use strategy for the position result based on the magnitude of the probability value, ensuring that appropriate action is taken in cases where the position requirements are more stringent or the confidence requirements are higher. Overall, the above additional information enhances the understanding and utilization of the position information by the system, improves the accuracy and reliability of the position estimation, and thus achieves the accurate determination of the terminal position.

In some embodiments of the disclosure, input data of the position prediction model includes:
K second measurement results; or
the second configuration information and the K second measurement results; or
the K second measurement results and second assistance information; or
the second configuration information, the K second measurement results, and the second assistance information.

It can be understood that by using these different input combinations flexibly, the position prediction model can more comprehensively consider multiple factors to better predict the position of the terminal, and this diversity helps to adapt to different positioning scenarios and network conditions.

In some embodiments of the disclosure, the second assistance information includes one or more of:
index(es) of one or more first uplink reference signals corresponding to each of the K first moments;
timestamp information of one or more first uplink reference signals corresponding to each of the K first moments;
timestamp information of the second measurement result corresponding to each of the K first moments;
beam information of one or more first uplink reference signals corresponding to each of the K first moments; and
speed information of the terminal corresponding to each of the K first moments.

In the embodiment of the disclosure, the index(es) of one or more first uplink reference signals corresponding to each of the K first moments include a unique identifier of each first uplink reference signal, which is used to distinguish and identify different first uplink reference signals, and ensures that the model can distinguish the measurement results of different signals.

In the embodiment of the disclosure, the timestamp information of one or more first uplink reference signals corresponding to each of the K first moments includes a specific time of the measurement moment of each first uplink reference signal, and is used to provide timing information to help the model understand the change of position information over time.

In the embodiment of the disclosure, the timestamp information of the first measurement result corresponding to each of the K first times includes time information generated by each first measurement result, which can help the model to model timing characteristics.

In the embodiment of the disclosure, the beam information of one or more first uplink reference signals corresponding to each of the K first moments includes beam information of each first uplink reference signal, such as the propagation direction of the signal, and is used to provide additional environmental information, which helps the model to more accurately understand the signal propagation path.

In the embodiment of the disclosure, the beam information of one or more first uplink reference signals corresponding to each of the K first moments includes beam information of each first uplink reference signal, such as propagation distance, path loss and other information, and is used to provide detailed information about the signal propagation environment for the model to perform more accurate position prediction.

In the embodiment of the disclosure, the speed information of the terminal corresponding to each of the K first moments includes speed information of the terminal corresponding to each first moment, which helps the model to better adapt to the position change of the moving terminal.

It can be understood that the comprehensive usage of the above-mentioned second assistance information enables the model to more comprehensively understand and predict the position, enhances the ability of the model to model the spatiotemporal relationship, and improves the accuracy and robustness of the position prediction.

In some embodiments of the disclosure, the beam information of the first uplink reference signal includes one or more of:
Spatial Relation Information (SRI) of the first uplink reference signal, which is configured and/or activated by the second network device;
an uplink Transmission Configuration Indicator (TCI) state and/or a joint TCI state of the first uplink reference signal;
a spatial transmit filter of the first uplink reference signal determined by the terminal, wherein the spatial transmit filter is determined by the terminal according to a measurement result of a received downlink reference signal; and
an index of the first uplink reference signal.

It will be appreciated that the beam information enumerated above provides specific details regarding transmission and reception of the reference signal, helping the terminal and the network to better understand the characteristics and environmental conditions of the signals, thereby improving the accuracy of position prediction.

In some embodiments of the disclosure, the method further includes an operation as follows.

The second network device sends the second prediction results of the terminal respectively corresponding to the M second moments to the first network device. On this basis, according to the second configuration information transmitted by the first network device to the second network device, the second prediction result of the terminal corresponding to each of the M second moments may further include: beam information of one or more second uplink reference signals corresponding to each of the M second moments; and/or a second probability value of the second prediction result of the terminal corresponding to each of the M second moments. In this way, the first network device can predict the position information of the terminal corresponding to each of the M second moments from the received K first measurement results.

In the embodiment of the disclosure, when the second prediction result of the terminal corresponding to each of the M second moments transmitted by the terminal and received by the first network device is the information for estimating the position of the terminal, the first network device determines the position information of the terminal corresponding to each of the M second moments according to the information for estimating the position of the terminal of the terminal corresponding to each of the M second moments.

In some embodiments of the disclosure, the second prediction results of the terminal respectively corresponding to the M second moments are carried in second positioning response information. Herein, the second positioning response information is used to indicate that the second network device allows the first network device to acquire position information of the terminal.

In the embodiment of the disclosure, the second network device transmits second positioning response information to the first network device, and the second positioning response information carries second prediction results of the terminal respectively corresponding to M second moments. Correspondingly, the first network device receives the second positioning response information, and parses the second positioning response information, thereby obtaining the second prediction results of the terminal respectively corresponding to M second moments.

In the embodiment of the disclosure, the second positioning response information may be a high-layer parameter *ProvideLocationInformation* in the LPP protocol.

Exemplarily, the second positioning response information may be represented as:

```
SEQUENCE {
 configuration of M future moments, data type 1
 moment information corresponding to position coordinate 1
     position coordinate 1
     beam information 1, data type 2, optional
 probability value corresponding to position coordinate 1, data type 3, optional
 ...
       }
```

In the embodiment of the disclosure, a position prediction method is provided that applied to the second network device. On one hand, by analyzing the measurement results at K first moments, the system can capture timing information and change trends, so as to better understand the motion pattern and position change of the terminal device. On one hand, using the measurement results at first moments, a model or an algorithm may be applied to predict the terminal position(s) at future moment(s) (second moment(s)). This helps to predict the position of the terminal device in advance, and for terminals with high mobility, such prediction can have practical significance in terms of network resource management and service provision. On one hand, by comprehensively considering the measurement results at multiple moments, the accuracy of position prediction can be improved, and the real-time capability may also be improved, making the system more responsive. Generally speaking, by making full use of the measurement results of historical moments for position prediction, it can bring better performance and effect in the positioning system, and improve the understanding and prediction accuracy of terminal device's position.

FIG. 14 is a third schematic flowchart of an optional position prediction method according to an embodiment of the disclosure, which is applied to a first network device. The method includes operations S601 to S602.

In operation 601, configuration information is determined, wherein the configuration information is used to instruct the first network device to perform position prediction by using measurement results respectively corresponding to K first moments.

In operation 602, prediction results of a terminal respectively corresponding to M second moments are determined based on the configuration information and the measurement results respectively corresponding to the K first moments, wherein the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1.

In the embodiment of the disclosure, the first network device acquires K measurement results sent by the terminal or the second network device.

In some embodiments of the disclosure, for the K measurement results, there may be following two cases depending on the source of the measurement results.

In a first case, the K measurement results are K first measurement results from the terminal, where the K first measurement results are obtained by measuring one or more first downlink reference signals corresponding to each of the K first moments.

In some embodiments, the terminal sends the K first measurement results to the first network device. In this way, the first network device can predict the position information of the terminal corresponding to each of the M second moments from the received K first measurement results.

In some embodiments of the disclosure, the terminal sends the first assistance information to the first network device. Accordingly, the first network device receives the first assistance information from the terminal. In this way, the first network device can predict the position information of the terminal corresponding to each of the M second moments from the received K first measurement results and the first assistance information.

In a second case, the K measurement results are K second measurement results from the second network device, where the K second measurement results are obtained by measuring one or more first uplink reference signals corresponding to each of the K first moments.

In some embodiments of the disclosure, the second network device sends K second measurement results to the first network device. In this way, the first network device can predict the position information of the terminal corresponding to each of the M second moments based on the K second measurement results.

In some embodiments of the disclosure, the second network device sends the second assistance information to the first network device. Accordingly, the first network device receives the second assistance information from the second network device. In this way, the first network device can predict the position information of the terminal respectively corresponding to the M second moments according to the K second measurement results and the second assistance information.

In the embodiment of the disclosure, in the assisted positioning method based on the terminal-side model or the assisted positioning method based on the model of the second network device, the first network device determines the position information of the terminal respectively corresponding to the M second moments according to the information for estimating the position of the terminal corresponding to each of the M second moments.

In the embodiment of the disclosure, for the position prediction method for which the model (i.e., the position prediction model mentioned above) is deployed on the side of the first network device, depending on the different inputs (i.e., the measurement results) of the model, the position prediction method with the model deployed on the side of the first network device is further divided into two schemes.

A first scheme is a terminal-assisted positioning method (i.e., terminal-assisted positioning) based on the model of the first network device.

A second scheme is a second-network-device assisted positioning method (that is, the second-network-device-assisted positioning) based on the model of the first network device.

Specifically, when the position prediction method is the terminal-assisted positioning method based on the model of the first network device, the K measurement results are the K first measurement results from the terminal. When the position prediction method is the second-network-device-assisted positioning method based on the model of the first network device, the K measurement results are K second measurement results from the second network device.

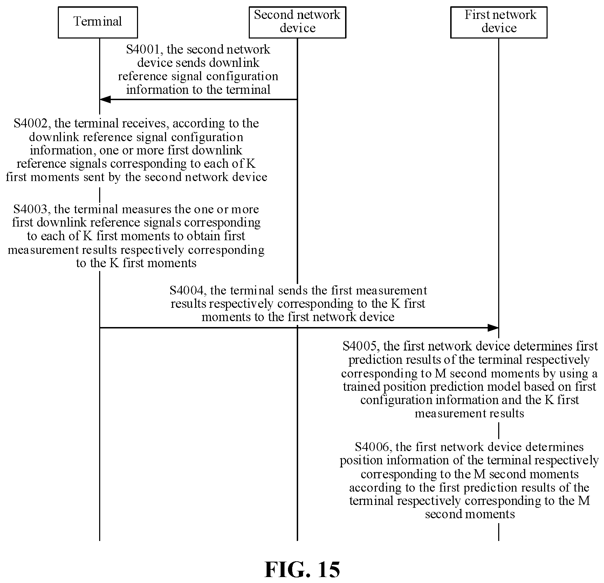

In the embodiment of the disclosure, as shown in FIG. 15, the interaction process of the assisted positioning method based on the model of the first network device involves a terminal (UE), a first network device (LMF), and a second network device (gNB), and the method includes operations S4001 to S4006.

In operation S4001, the second network device sends downlink reference signal configuration information to the terminal.

In operation S4002, the terminal receives, according to the downlink reference signal configuration information, one or more first downlink reference signals corresponding to each of K first moments sent by the second network device.

In operation S4003, the terminal measures the one or more first downlink reference signals corresponding to each of K first moments to obtain first measurement results respectively corresponding to the K first moments.

In the embodiment of the disclosure, the terminal may further send the first assistance information to the first network device.

In operation S4004, the terminal sends the first measurement results respectively corresponding to the K first moments to the first network device.

In operation S4005, the first network device determines first prediction results of the terminal respectively corresponding to M second moments by using a trained position prediction model based on first configuration information and the K first measurement results.

In an embodiment of the disclosure, the input data of the position prediction model includes:
K first measurement results; or
the first configuration information and the K first measurement results; or
the K first measurement results and first assistance information; or
the first configuration information, the K first measurement results, and the first assistance information.

In operation S4006, the first network device determines position information of the terminal respectively corresponding to the M second moments according to the first prediction results of the terminal respectively corresponding to the M second moments.

It is to be noted that for the process for determining the first prediction result of the terminal corresponding to each of the M second moments by the position prediction model, reference can be made to related description above.

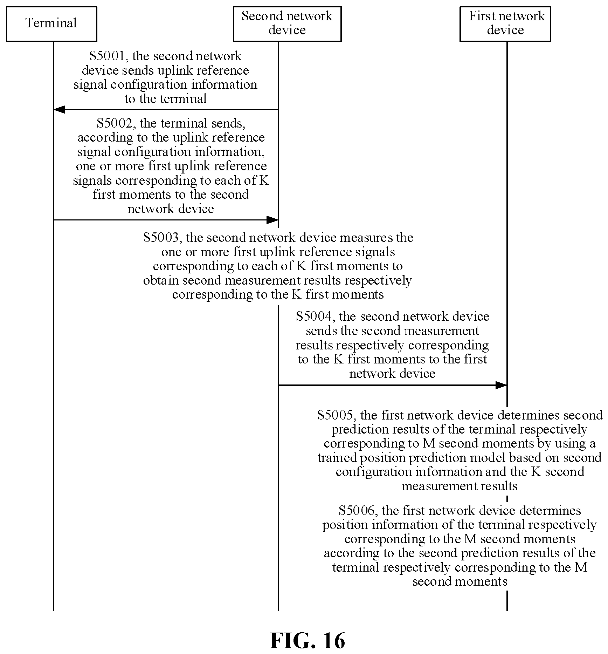

In the embodiment of the disclosure, as shown in FIG. 16, the interaction process of the second-network-device-assisted positioning method based on the model of the first network device involves a terminal (UE), a first network device (LMF), and a second network device (gNB), and the method includes operations S5001 to S5006.

In operation S5001, the second network device sends uplink reference signal configuration information to the terminal.

In operation S5002, the terminal sends, according to the uplink reference signal configuration information, one or more first uplink reference signals corresponding to each of K first moments to the second network device.

In operation S5003, the second network device measures the one or more first uplink reference signals corresponding to each of K first moments to obtain second measurement results respectively corresponding to the K first moments.

In the embodiment of the disclosure, the second network device may further send the second assistance information to the first network device.

In operation S5004, the second network device sends the second measurement results respectively corresponding to the K first moments to the first network device.

In operation S5005, the first network device determines second prediction results of the terminal respectively corresponding to M second moments by using a trained position prediction model based on second configuration information and the K second measurement results.

In the embodiment of the disclosure, the input data of the position prediction model includes:
K second measurement results; or
the second configuration information and the K second measurement results; or
the K second measurement results and second assistance information; or
the second configuration information, the K second measurement results, and the second assistance information.

In operation S5006, the first network device determines position information of the terminal respectively corresponding to the M second moments according to the second prediction results of the terminal respectively corresponding to the M second moments.

It is to be noted that for the process for determining the second prediction result of the terminal corresponding to each of the M second moments by the position prediction model, reference can be made to related description above.

For the first case (i.e., the K measurement results are the K first measurement results from the terminal), the prediction prediction method further includes operations S701 to S702.

In operation S701, the first network device determines first configuration information, wherein the first configuration information is used to instruct the terminal to perform position prediction by using K first measurement results.

In the embodiment of the disclosure, for the description of S701, reference can be made to the above description of S301, which will not be described again here.

In operation S702, first prediction results of the terminal respectively corresponding to M second moments are determined based on the first configuration information and the K first measurement results, wherein the first prediction result is related to position information of the terminal.

In some embodiments of the disclosure, the first prediction results of the terminal respectively corresponding to the M second moments are determined by using a trained position prediction model based on the first configuration information and the K first measurement results, wherein the position prediction model includes a neural network model or a machine learning model.

In the embodiment of the disclosure, for the description of S702, reference can be made to the above description of S302, which will not be described again here.

For the second case (i.e., the K measurement results are the K first measurement results from the second network device), the position prediction method further includes operations S801 to S802.

In operation S801, second configuration information is determined, wherein the second configuration information is used to instruct the terminal to perform position prediction by using K second measurement results.

It is to be noted that for the description of S801, reference can be made to the above description of S501, which will not be described again here.

In operation S802, second prediction results of the terminal respectively corresponding to M second moments are determined based on the second configuration information and the K second measurement results, wherein the second prediction result is related to position information of the terminal.

It is to be noted that for the description of S802, reference can be made to the above description of S502, which will not be described again here.

In some embodiments of the disclosure, the method further includes an operation as follows.

The first network device acquires the second prediction results of the terminal respectively corresponding to the M second moments from a second network device.

In some embodiments of the disclosure, the second prediction results of the terminal respectively corresponding to the M second moments are carried in second positioning response information. Herein, the second positioning response information is used to indicate that the second network device allows the first network device to acquire position information of the terminal.

In some embodiments of the disclosure, the second network device includes one or more of:
a base station device in a cell, a Transmission Reception Point (TRP) in the base station device, and an antenna point in the base station device.

In some embodiments of the disclosure, the first uplink reference signal includes Sounding Reference Signal (SRS).

In some embodiments of the disclosure, the first or fourth indication information includes one or more of:
a number of the M second moments;
an interval of the M second moments;
a system frame number corresponding to each of the M second moments;
a slot number corresponding to each of the M second moments; and
a time expressed in Coordinated Universal Time (UTC) corresponding to each of the M second moments.

In some embodiments of the disclosure, for a position prediction method in which a model (i.e., the position prediction model mentioned above) is deployed on the terminal side, the first network device sends the first configuration information to the terminal; or, the first network device sends the second configuration information to the second network device. Correspondingly, the terminal receives the first configuration information; or, the second network device receives the second configuration information.

In some embodiments of the disclosure, the first configuration information is carried in first positioning request information, wherein the first positioning request information is used to indicate that the first network device requests acquisition of position information of the terminal from the terminal; the second configuration information is carried in second positioning request information, wherein the second positioning request information is used to indicate that the first network device requests acquisition of position information of the terminal from the second network device.

In summary, for the position prediction method provided by the disclosure, there are three cases depending on the deployment manner of the model (position prediction model).

In a first case, the method is a position prediction method for which the model (i.e., the position prediction model mentioned above) is deployed on the terminal side, which is further divided, depending on the different outputs (i.e., the first prediction results respectively corresponding to the M second moments) of the model, into two schemes.

A first scheme is direct positioning method based on the terminal-side model (i.e., direct positioning by UE-side model).

A second scheme is assisted positioning method based on the terminal-side model (i.e., assisted positioning by UE-side model).

In a second case, the method is a position prediction method for which the model is deployed on the second network device side, and the output of the model may be one or more pieces of information for estimating the position of the terminal corresponding to each of M second moments.

In a third case, the method is a position prediction method for which the model is deployed on the first network device side, which is further divided, depending on different inputs (i.e., measurement results) of the model, into two schemes.

A first scheme is a terminal-assisted positioning method (i.e., terminal-assisted positioning) based on the model of the first network device.

A second scheme is a second-network-device assisted positioning method (that is, the second-network-device-assisted positioning) based on the model of the first network device.

First embodiment: model deployed on the terminal side

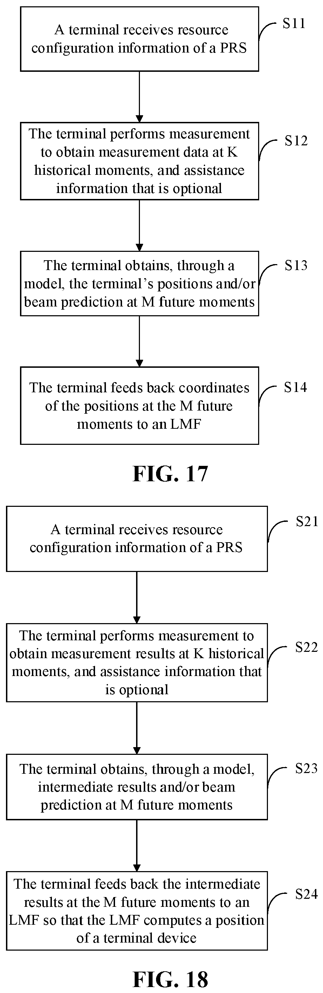

In the embodiment of the disclosure, as shown in FIG. 17, the position prediction method may include operations S11 to S14.

In operation S11, a terminal receives resource configuration information of a PRS.

In operation S12, the terminal performs measurement to obtain measurement data at K historical moments, and assistance information that is optional.

In operation S13, the terminal obtains, through a model, the terminal's positions and/or beam prediction at M future moments.

In operation S14, the terminal feeds back coordinates of the positions at the M future moments to an LMF.

In the embodiment of the disclosure, the terminal device (UE) receives downlink reference signal configuration information, which includes configuration information of a downlink reference signal resource set and of downlink reference signal resources. The downlink reference signal may be a PRS, an SSB, or a CSI-RS. The UE receives, according to the downlink reference signal configuration information, downlink reference signals (first downlink reference signals) transmitted by one or more cells at K different historical moments.

In the embodiment of the disclosure, the cell (second network device) can be replaced by a TRP, and a network node such as an Antenna Point (AP), which are not limited.

In an embodiment of the disclosure, the set of downlink reference signal resources are for positioning.

In the embodiment of the disclosure, in the process of model training, the data set includes input data and corresponding labels. Herein, the input data includes measurement data (first measurement result) at K historical moments measured from the downlink reference signal(s), and the measurement data may be one or more of: measurement delay, measurement phase, measurement power, CIR, PDP, DP, RSRP, reference signal reception path power, TOA, and uplink TDOA.

In the embodiment of the disclosure, the weights of measurement data corresponding to different historical moments may be different. For example, the weight of measurement data corresponding to a far historical moment is relatively small, and the weight of measurement data corresponding to a close historical moment is relatively large. This may be applicable to all embodiments. Since the measurement data whose time is later is closer to the current position of the terminal device, the contribution to prediction of the position of the future moment may be greater.

In the embodiment of the disclosure, when the model is trained, labels corresponding to the input data are input, which are terminal device positions.

In the embodiment of the disclosure, the inputs of the model may further include one or more of: a set of TRP indexes corresponding to measurement data at each historical moment; a timestamp corresponding to each downlink reference signal resource; a timestamp corresponding to measurement data at each historical moment; beam information corresponding to measurement data at each historical moment; spatial information associated with each downlink reference signal resource (which may be understood as beam information associated with the downlink reference signal resource); and a speed of the terminal device.

In the embodiment of the disclosure, the TRP indexes included in the TRP index set corresponding to the measurement data at different historical moments may be the same, or not exactly the same. Due to the mobility of the UE, on the movement trajectory of the UE, the set of TRP indexes for UE communication are different at different time points.

In the embodiment of the disclosure, the spatial information associated with each downlink reference signal resource has the possibility that each reference signal resource is associated with one piece of spatial information. The spatial information may be a joint TCI state, a QCL type, or a spatial receive filter. The spatial information is beneficial to improve the accuracy of positioning under mobility conditions.

In the embodiment of the disclosure, if the model training is performed by the LMF or a third-party server, the above information is collected by each TRP and then given to the LMF.

In the embodiment of the disclosure, the output of the model may further include beam information corresponding to M future moments. The beam information may be reported to the LMF or gNB. The terminal device may send and receive information by directly using the predicted spatial information at M future moments, or may report the beam information to the gNB or the LMF as the assistance information.

In the embodiment of the disclosure, the output of the model may further include probability values corresponding to terminal device positions at M future moments. For example, there is an 80% probability that the terminal device at a moment 1 will be located at position coordinate 1. The probability value represents soft information of of the credibility of the position prediction, which is beneficial to provide a reference for a network device when making a position-related decision.

In the embodiment of the disclosure, for the UE-side model, the AI/ML model directly performs positioning, and the interaction information transmitted by the LMF to the UE includes: configuration of M future moments, whether beam information (beam information of a reference signal) is included, and whether a probability value is output. For example, the interaction information may include a high-layer parameter *RequestLocationInformation* in the LPP protocol.

In the embodiment of the disclosure, the configuration of M future moments includes one or more of: a value of M, configuration of a time interval corresponding to M future moments, an SFN, a slot number, and a time expressed in the UTC.

In the embodiment of the disclosure, the data type in the request positioning information is not limited, and may be any type such as an integer type, an enumeration type, or a Boolean type.

In the embodiment of the disclosure, for the UE-side model, the AI/ML model directly performs positioning, and the information that the UE interacts with the LMF includes: terminal device positions and/or beam information at M future moments, and probability values. For example, the interaction information may include a high-layer parameter *ProvideLocationInformation* in the LPP protocol.

In the embodiment of the disclosure, as shown in FIG. 18, the position prediction method may include operations S21 to S24.

In operation S21, a terminal receives resource configuration information of a PRS.

In operation S22, the terminal performs measurement to obtain measurement results at K historical moments, and assistance information that is optional.

In operation S23, the terminal obtains, through a model, intermediate results and/or beam prediction at M future moments.

In operation S24, the terminal feeds back the intermediate results at the M future moments to an LMF so that the LMF computes a position of a terminal device.

In the embodiment of the disclosure, when the model output is an intermediate result of the terminal device position, other contents are the same as the above and will not be described again, and the model output is modified to the following contents: intermediate results and/or corresponding beam information of the positions of the terminal device at M future moments. The intermediate result of the position of the terminal device may be Reference Signal Time Difference (RSTD) measurement result, round-trip delay measurement result, AOA measurement result, AOD measurement result, RSRP, multipath measurement information, LOS measurement information, TOA.

In the embodiment of the disclosure, the output of the model may further include beam information corresponding to M future moments. The terminal device may send and receive information by directly using the predicted spatial information at M future moments, or may report the beam information to the gNB or the LMF as the assistance information.

In the embodiment of the disclosure, the output of the model may further include probability values corresponding to intermediate results of terminal device positions at M future moments. The probability value represents soft information of of the credibility of the position prediction, which is beneficial to provide a reference for a network device when making a position-related decision.

In the embodiment of the disclosure, the information interaction between the UE and the LMF is performed through the LPP protocol, and the contents interacted are modified to the above-described intermediate results.

### Second embodiment

In the embodiment of the disclosure, the model is deployed on the network device (gNB) side, and the AI/ML model assists the positioning, that is, the output is an intermediate result of the position of the terminal device.

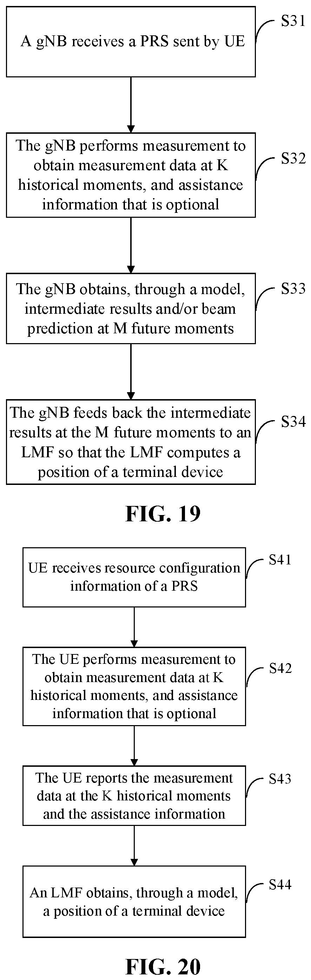

In the embodiment of the disclosure, as shown in FIG. 19, the position prediction method may include operations S31 to S34.

In operation S31, a gNB receives a PRS sent by UE.

In operation S32, the gNB performs measurement to obtain measurement data at K historical moments, and assistance information that is optional.

In operation S33, the gNB obtains, through a model, intermediate results and/or beam prediction at M future moments.

In operation S34, the gNB feeds back the intermediate results at the M future moments to an LMF so that the LMF computes a position of a terminal device.

In the embodiment of the disclosure, the terminal device UE receives SRS configuration information transmitted by the gNB (first network device), and the SRS configuration information includes configuration information of an SRS resource set and of SRS resources. The UE transmits SRS to one or more cells at K different historical moments according to the SRS configuration information.

In the embodiment of the disclosure, the cell can be replaced by TRP, and a network node such as AP, which are not limited.

In the embodiment of the disclosure, each SRS resource may correspond to one piece of spatial relationship information, or in other words, an uplink transmission spatial filter, which is used only in the high frequency band of FR2.

In an embodiment of the disclosure, the SRS resource set is an SRS resource set for positioning.

In the embodiment of the disclosure, in the process of model training, the data set includes input data and corresponding labels.

In the embodiment of the disclosure, the input data includes measurement data at p historical moments obtained according to the SRS, and the measurement data may be one or more of: measurement delay, measurement phase, measurement power, CIR, PDP, DP, RSRP, reference signal reception path power, TOA, and uplink TDOA.

In the embodiment of the disclosure, the labels corresponding to the training data are: Reference Signal Time Difference (RSTD) measurement result, round-trip delay measurement result, AOA measurement result, AOD measurement result, RSRP, multipath measurement information, LOS measurement information, and TOA.

In the embodiment of the disclosure, if model training is performed by the the gNB side, the label information is given to the gNB by the LMF through signaling. If the model training is by the LMF or a third-party server, there is no need to exchange label information with the gNB.

In the embodiment of the disclosure, the input data of the model may further include one or more of: a set of TRP indexes corresponding to measurement data at each historical moment; a timestamp corresponding to each SRS resource; a timestamp corresponding to measurement data at each historical moment; beam information corresponding to measurement data at each historical moment; spatial information associated with each SRS resource (which may be understood as beam direction associated with the SRS resource); and a speed of the terminal device.

In the embodiment of the disclosure, the TRP indexes included in the TRP index set corresponding to the measurement data at different historical moments may be the same, or not exactly the same. Due to the mobility of the UE, on the movement trajectory of the UE, the set of TRP indexes for UE communication are different at different time points.

In the embodiment of the disclosure, the spatial information associated with each SRS resource may be one of: spatial relationship information configured and/or activated by the NW for the SRS resource, uplink or joint TCI state, the transmission spatial filter of the SRS resource determined by the UE itself according to downlink reference signal measurements, and a downlink reference signal resource index associated with the SRS resource. The spatial information is beneficial to improve the accuracy of positioning under mobility conditions.

In the embodiment of the disclosure, if the model training is performed by the LMF or a third-party server, the above information is collected by each TRP and then given to the LMF.

In the embodiment of the disclosure, the output of the model is intermediate results of the positions of the terminal device at M future times and/or corresponding beam information. The intermediate result of the position of the terminal device may be Reference Signal Time Difference (RSTD) measurement result, round-trip delay measurement result, AOA measurement result, AOD measurement result, RSRP, multipath measurement information, LOS measurement information.

In the embodiment of the disclosure, the output of the model may further include beam information corresponding to M future moments. The terminal device may send and receive information by directly using the predicted spatial information at M future moments, or may report the beam information to the gNB or the LMF as the assistance information.

In the embodiment of the disclosure, the output of the model may further include probability values corresponding to intermediate results of terminal device positions at M future moments. The probability value represents soft information of of the credibility of the position prediction, which is beneficial to provide a reference for a network device when making a position-related decision.

### Third embodiment

In the embodiment of the disclosure, as shown in FIG. 20, the position prediction method may include operations S41 to S44.

In operation S41, UE receives resource configuration information of a PRS.

In operation S42, the UE performs measurement to obtain measurement data at K historical moments, and assistance information that is optional.

In operation S43, the UE reports the measurement data at the K historical moments and the assistance information.

In operation S44, an LMF obtains, through a model, a position of a terminal device.

In the embodiment of the disclosure, the model is deployed on the LMF side, and for UE-assisted positioning, the input data of the model is reported by the UE, and the information interacted between the UE and the LMF is no longer the output result of the AI/ML model in the first embodiment, but the input data measured by the UE according to the PRS configuration information.

In the embodiment of the disclosure, the model is deployed on the LMF side, and for gNB-assisted positioning, the input data of the model is transmitted by the gNB to the LMF, and the information interacted between the gNB and the LMF is no longer the output result of the AI/ML model in the second embodiment, but the input data measured by the gNB according to the SRS configuration information sent by the UE.

The preferred embodiments of the disclosure have been described in detail above with reference to the accompanying drawings, but the disclosure is not limited to the specific details in the above-described embodiments. Within the scope of the technical concept of the disclosure, various simple modifications can be made to the technical solutions of the disclosure, and these simple modifications all fall within the scope of protection of the disclosure. For example, various specific technical features described in the above-described detailed description can be combined in any suitable manner without contradiction, and various possible combinations will not be described separately in the disclosure in order to avoid unnecessary repetition. For example, various embodiments of the disclosure may be combined arbitrarily, and as long as they do not violate the idea of the disclosure, they should also be regarded as the disclosure of the disclosure. For another example, on the premise that there is no conflict, each embodiment described in the disclosure and/or the technical features in each embodiment can be arbitrarily combined with the prior art, and the technical solution obtained after the combination should also fall within the scope of protection of the disclosure.

It should be further understood that in various method embodiments of the present disclosure, sizes of serial numbers of the above processes do not mean a sequence of execution, and the sequence of execution of each process should be determined by its function and internal logic, and should not constitute any limitation on implementation processes of the embodiments of the disclosure. In addition, in the embodiments of the disclosure, the terms "downlink", "uplink" and "sidelink" are used to indicate the transmission direction of signals or data. Herein, "downlink" is used to indicate that the transmission direction of signals or data is a first direction transmitted from a station to a UE of the cell, "uplink" is used to indicate that the transmission direction of signals or data is a second direction transmitted from the UE of the cell to the station, and "sidelink" is used to indicate that the transmission direction of signals or data is a third direction transmitted from UE 1 to UE 2. For example, "downlink signal" indicates that the transmission direction of the signal is the first direction. In addition, in the embodiments of the disclosure, the term "and/or" is merely an association relationship describing associated objects, indicating that there may be three kinds of relationships. Specifically, A and/or B may represent three cases in which A is present alone, A and B are present at the same time, and B is present alone. In addition, the character "/" in the present disclosure generally indicates that the relationship between the related objects is "or".

Based on the foregoing embodiments, embodiments of the disclosure provide corresponding apparatuses for determining a spatial filter.

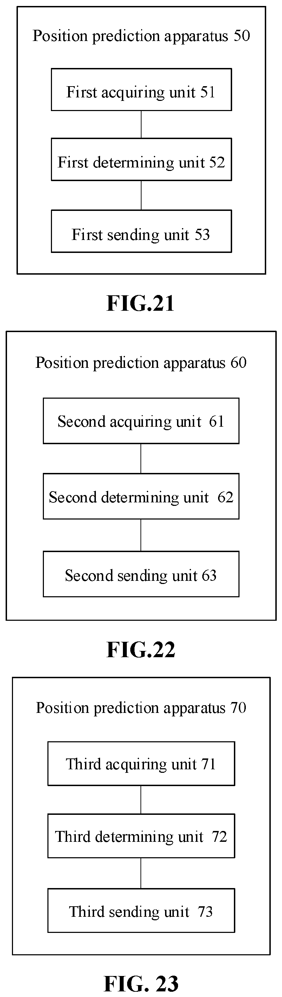

FIG. 21 is a first schematic structural diagram of an optional position prediction apparatus according to an embodiment of the disclosure, which is applied to a terminal. As shown in FIG. 21, the position prediction apparatus 50 includes a first acquiring unit 51, a first determining unit 52, and a first sending unit 53.

The first acquiring unit 51 is configured to receive first configuration information, wherein the first configuration information is used to instruct the terminal to perform position prediction by using first measurement results respectively corresponding to K first moments.

The first determining unit 52 is configured to determine first prediction results of the terminal respectively corresponding to M second moments based on the first configuration information and the first measurement results respectively corresponding to the K first moments. Herein, the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1.

In some embodiments, the first determining unit 52 is configured to determine the first prediction results of the terminal respectively corresponding to the M second moments by using a trained position prediction model based on the first configuration information and the K first measurement results, wherein the position prediction model includes a neural network model or a machine learning model.

In some embodiments, the first prediction result includes: position information of the terminal, or information of the terminal for estimating a position of the terminal.

In some embodiments, the information for estimating the position of the terminal includes one or more of: time difference(s) of one or more second downlink reference signals corresponding to each of the M second moments; round-trip delay(s) of one or more second downlink reference signals corresponding to each of the M second moments; Angle(s) of Arrival (AOA) of one or more second downlink reference signals corresponding to each of the M second moments; Angle(s) of Departure (AOD) of one or more second downlink reference signals corresponding to each of the M second moments; Reference Signal Received Power (RSRP) of one or more second downlink reference signals corresponding to each of the M second moments; multipath measurement information of one or more second downlink reference signals corresponding to each of the M second moments; Line of Sight (LOS) indication information of one or more second downlink reference signals corresponding to each of the M second moments; and Time of Arrival (TOA) of one or more second downlink reference signals corresponding to each of the M second moments.

In some embodiments, the first prediction result further includes: beam information of one or more second downlink reference signals corresponding to each of the M second moments; and/or, a first probability value of the first prediction result of the terminal corresponding to each of the M second moments, wherein the first probability value represents a confidence of the first prediction result of the terminal.

In some embodiments, input data of the position prediction model includes: K first measurement results; or the first configuration information and the K first measurement results; or the K first measurement results and first assistance information; or the first configuration information, the K first measurement results, and the first assistance information.

In some embodiments, the first assistance information includes one or more of: index(es) of one or more first downlink reference signals corresponding to each of the K first moments; timestamp information of one or more first downlink reference signals corresponding to each of the K first moments; timestamp information of the first measurement result corresponding to each of the K first moments; beam information of one or more first downlink reference signals corresponding to each of the K first moments; and speed information of the terminal corresponding to each of the K first moments.

In some embodiments, the beam information of the first downlink reference signal includes one or more of: a joint Transmission Configuration Indicator (TCI) state of the first downlink reference signal; a Quasi Co-Location (QCL) type of the first downlink reference signal; and a spatial reception filter of the first downlink reference signal.

In some embodiments, the first configuration information includes one or more of: first indication information, second indication information, and third indication information. Herein, the first indication information is used to indicate time configuration information of the M second moments; the second indication information is used to indicate whether to predict beam information of one or more second downlink reference signals corresponding to each of the M second moments; and the third indication information is used to indicate whether to predict a first probability value of the first prediction result of the terminal corresponding to each of the M second moments.

In some embodiments, the first indication information includes one or more of: a number of the M second moments; an interval of the M second moments; a system frame number corresponding to each of the M second moments; a slot number corresponding to each of the M second moments; and a time expressed in Coordinated Universal Time (UTC) corresponding to each of the M second moments.

In some embodiments, the first configuration information is carried in first positioning request information sent by a first network device. Herein, the first positioning request information is used to indicate that the first network device requests acquisition of position information of the terminal from the terminal.

In some embodiments, the first measurement result includes one or more of: time delay information of the first downlink reference signal; phase information of the first downlink reference signal; power information of the first downlink reference signal; a Channel Impulse Response (CIR) of the first downlink reference signal; a Power Delay Profile (PDP) of the first downlink reference signal; a Delay Profile (DP) of the first downlink reference signal; RSRP of the first downlink reference signal; a reference signal reception path power of the first downlink reference signal; a TOA of the first downlink reference signal; and an uplink Time Difference of Arrival (TDOA) of the first downlink reference signal.

In some embodiments, the first sending unit 53 is configured to send, to a first network device, the first prediction results of the terminal respectively corresponding to the M second moments.

In some embodiments, the first prediction results of the terminal respectively corresponding to the M second moments are carried in first positioning response information. Herein, the first positioning response information is used to indicate that the terminal allows the first network device to acquire position information of the terminal.

In some embodiments, the first downlink reference signal includes one or more of: Positioning Reference Signal (PRS), Synchronization Signal Block (SSB), and Channel State Information-Reference Signal (CSI-RS).

In some embodiments, the first acquiring unit 51 is further configured to acquire downlink reference signal configuration information sent by a second network device; and receive, according to the downlink reference signal configuration information, one or more first downlink reference signals corresponding to each of the K first moments sent by the second network device.

In some embodiments, the second network device includes one or more of: a base station device in a cell, a Transmission Reception Point (TRP) in the base station device, and an antenna point in the base station device.

In some embodiments, the first sending unit 53 is further configured to send the K first measurement results to the first network device.

In some embodiments, the first sending unit 53 is further configured to send first assistance information to the first network device.

FIG. 22 is a second schematic structural diagram of an optional position prediction apparatus according to an embodiment of the disclosure, which is applied to a second network device. As shown in FIG. 22, the position prediction apparatus 60 includes a second acquiring unit 61, a second determining unit 62, and a second sending unit 63.

The second acquiring unit 61 is configured to receive second configuration information, wherein the second configuration information is used to instruct the second network device to perform position prediction by using second measurement results respectively corresponding to K first moments.

The second determining unit 62 is configured to determine second prediction results of a terminal respectively corresponding to M second moments based on the second configuration information and the second measurement results respectively corresponding to the K first moments. Herein, the second measurement results respectively corresponding to the K first moments are obtained by measuring one or more received first uplink reference signals corresponding to each of the K first moments, the second prediction results are related to position information of the terminal, and the second moment is a future moment after the first moment, K and M being positive integers greater than or equal to 1.

In some embodiments, the second determining unit 62 is further configured to determine the second prediction results of the terminal respectively corresponding to the M second moments by using a trained position prediction model based on the second configuration information and the K second measurement results. Herein, the position prediction model includes a neural network model or a machine learning model.

In some embodiments, the second prediction result includes information for estimating a position of the terminal, the information for estimating a position of the terminal includes one or more of: time difference(s) of one or more second uplink reference signals corresponding to each of the M second moments; round-trip delay(s) of one or more second uplink reference signals corresponding to each of the M second moments; Angle(s) of Arrival (AOA) of one or more second uplink reference signals corresponding to each of the M second moments; Angle(s) of Departure (AOD) of one or more second uplink reference signals corresponding to each of the M second moments; Reference Signal Received Power (RSRP) of one or more second uplink reference signals corresponding to each of the M second moments; multipath measurement information of one or more second uplink reference signals corresponding to each of the M second moments; and Line of Sight (LOS) indication information of one or more second uplink reference signals corresponding to each of the M second moments.

In some embodiments, the second prediction result further includes: beam information of one or more second uplink reference signals corresponding to each of the M second moments; and/or, a second probability value of the second prediction result of the terminal corresponding to each of the M second moments, wherein the second probability value represents a confidence of the second prediction result of the terminal.

In some embodiments, input data of the position prediction model includes: K second measurement results; or the second configuration information and the K second measurement results; or the K second measurement results and second assistance information; or the second configuration information, the K second measurement results, and the second assistance information.

In some embodiments, the second assistance information includes one or more of: index(es) of one or more first uplink reference signals corresponding to each of the K first moments; timestamp information of one or more first uplink reference signals corresponding to each of the K first moments; timestamp information of the second measurement result corresponding to each of the K first moments; beam information of one or more first uplink reference signals corresponding to each of the K first moments; spatial information of one or more first uplink reference signals corresponding to each of the K first moments; and speed information of the terminal corresponding to each of the K first moments.

In some embodiments, the spatial information of the first uplink reference signal includes one or more of: Spatial Relation Information (SRI) of the first uplink reference signal, which is configured and/or activated by the second network device; an uplink Transmission Configuration Indicator (TCI) state and/or a joint TCI state of the first uplink reference signal; a spatial transmit filter of the first uplink reference signal determined by the terminal, wherein the spatial transmit filter is determined by the terminal according to a measurement result of a received downlink reference signal; and an index of the first uplink reference signal.

In some embodiments, the second configuration information includes one or more of: fourth indication information, fifth indication information, and sixth indication information, wherein the fourth indication information is used to indicate time configuration information of the M second moments; the fifth indication information is used to indicate whether to predict beam information of one or more second uplink reference signals corresponding to each of the M second moments; and the sixth indication information is used to indicate whether to predict a second probability value of the second prediction result of the terminal corresponding to each of the M second moments.

In some embodiments, the fourth indication information includes one or more of: a number of the M second moments; an interval of the M second moments; a system frame number corresponding to each of the M second moments; a slot number corresponding to each of the M second moments; and a time expressed in Coordinated Universal Time (UTC) corresponding to each of the M second moments.

In some embodiments, the second configuration information is carried in second positioning request information sent by a first network device. Herein, the second positioning request information is used to indicate that the first network device requests acquisition of position information of the terminal from the second network device.

In some embodiments, the second network device includes one or more of: a base station device in a cell, a Transmission Reception Point (TRP) in the base station device, and an antenna point in the base station device.

In some embodiments, the second measurement result includes one or more of: time delay information of the first uplink reference signal; phase information of the first uplink reference signal; power information of the first uplink reference signal; a Channel Impulse Response (CIR) of the first uplink reference signal; a Power Delay Profile (PDP) of the first uplink reference signal; a Delay Profile (DP) of the first uplink reference signal; RSRP of the first uplink reference signal; a reference signal reception path power of the first uplink reference signal; a Time of Arrival (TOA) of the first uplink reference signal; and an uplink Time Difference of Arrival (TDOA) of the first uplink reference signal.

In some embodiments, the second sending unit 63 is configured to send, to a first network device, the second prediction results of the terminal respectively corresponding to the M second moments.

In some embodiments, the second prediction results of the terminal respectively corresponding to the M second moments are carried in second positioning response information. Herein, the second positioning response information is used to indicate that the second network device allows the first network device to acquire position information of the terminal.

In some embodiments, the first uplink reference signal includes Sounding Reference Signal (SRS).

In some embodiments, the second sending unit 63 is further configured to send the K second measurement results to the first network device.

In some embodiments, the second sending unit 63 is further configured to send second assistance information to the first network device.

In some embodiments, the second acquiring unit 61 is further configured to receive one or more first uplink reference signals corresponding to each of the K first moments sent by the terminal according to uplink reference signal configuration information.

FIG. 23 is a third schematic structural diagram of an optional position prediction apparatus according to an embodiment of the disclosure, which is applied to a first network device. As shown in FIG. 23, the position prediction apparatus 70 includes a third acquiring unit 71, a third determining unit 72, and a third sending unit 73.

The third determining unit 72 is configured to: determine configuration information, wherein the configuration information is used to instruct the first network device to perform position prediction by using measurement results respectively corresponding to K first moments, and determine prediction results of a terminal respectively corresponding to M second moments based on the configuration information and the measurement results respectively corresponding to the K first moments. Herein, the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1.

In some embodiments, the K measurement results are K first measurement results from the terminal; the K first measurement results are obtained by measuring one or more first downlink reference signals corresponding to each of the K first moments; the configuration information is first configuration information; and the prediction result is a first prediction result. The the third determining unit 72 is configured to determine the first configuration information, wherein the first configuration information is used to instruct the terminal to perform position prediction by using the K first measurement results; and determine first prediction results of the terminal respectively corresponding to M second moments based on the first configuration information and the K first measurement results. Herein, the first prediction results are related to position information of the terminal.

In some embodiments, the third determining unit 72 is further configured to determine the first prediction results of the terminal respectively corresponding to the M second moments by using a trained position prediction model based on the first configuration information and the K first measurement results, wherein the position prediction model includes a neural network model or a machine learning model.

In some embodiments, the first prediction result includes: position information of the terminal, or information for estimating a position of the terminal.

In some embodiments, the information for estimating the position of the terminal includes one or more of: time difference(s) of one or more second downlink reference signals corresponding to each of the M second moments; round-trip delay(s) of one or more second downlink reference signals corresponding to each of the M second moments; Angle(s) of Arrival (AOA) of one or more second downlink reference signals corresponding to each of the M second moments; Angle(s) of Departure (AOD) of one or more second downlink reference signals corresponding to each of the M second moments; Reference Signal Received Power (RSRP) of one or more second downlink reference signals corresponding to each of the M second moments; multipath measurement information of one or more second downlink reference signals corresponding to each of the M second moments; Line of Sight (LOS) indication information of one or more second downlink reference signals corresponding to each of the M second moments; and Time of Arrival (TOA) of one or more second downlink reference signals corresponding to each of the M second moments.

In some embodiments, the first prediction result further includes: beam information of one or more second downlink reference signals corresponding to each of the M second moments; and/or, a first probability value of the first prediction result of the terminal corresponding to each of the M second moments, wherein the first probability value represents a confidence of the first prediction result of the terminal.

In some embodiments, the third acquiring unit 71 is further configured to receive first assistance information from the terminal.

In some embodiments, input data of the position prediction model includes: K first measurement results; or the first configuration information and the K first measurement results; or the K first measurement results and first assistance information; or the first configuration information, the K first measurement results, and the first assistance information.

In some embodiments, the first assistance information includes one or more of: index(es) of one or more first downlink reference signals corresponding to each of the K first moments; timestamp information of one or more first downlink reference signals corresponding to each of the K first moments; timestamp information of the first measurement result corresponding to each of the K first moments; beam information of one or more first downlink reference signals corresponding to each of the K first moments; and speed information of the terminal corresponding to each of the K first moments.

In some embodiments, the beam information of the first downlink reference signal includes one or more of: a joint Transmission Configuration Indicator (TCI) state of the first downlink reference signal; a Quasi Co-Location (QCL) type of the first downlink reference signal; and a spatial reception filter of the first downlink reference signal.

In some embodiments, the first configuration information includes one or more of: first indication information, second indication information, and third indication information. Herein, the first indication information is used to indicate time configuration information of the M second moments; the second indication information is used to indicate whether to predict beam information of one or more second downlink reference signals corresponding to each of the M second moments; and the third indication information is used to indicate whether to predict a first probability value of the first prediction result of the terminal corresponding to each of the M second moments.

In some embodiments, the first measurement result includes one or more of: time delay information of the first downlink reference signal; phase information of the first downlink reference signal; power information of the first downlink reference signal; a Channel Impulse Response (CIR) of the first downlink reference signal; a Power Delay Profile (PDP) of the first downlink reference signal; a Delay Profile (DP) of the first downlink reference signal; RSRP of the first downlink reference signal; a reference signal reception path power of the first downlink reference signal; a TOA of the first downlink reference signal; and an uplink Time Difference of Arrival (TDOA) of the first downlink reference signal.

In some embodiments, the third acquiring unit 71 is further configured to acquire the first prediction results of the terminal respectively corresponding to the M second moments from the terminal.

In some embodiments, the first prediction results of the terminal respectively corresponding to the M second moments are carried in first positioning response information. Herein, the first positioning response information is used to indicate that the terminal allows the first network device to acquire position information of the terminal.

In some embodiments, the first downlink reference signal includes one or more of: Positioning Reference Signal (PRS), Synchronization Signal Block (SSB), and Channel State Information-Reference Signal (CSI-RS).

In some embodiments, the K measurement results are K second measurement results from a second network device; the K second measurement results are obtained by measuring one or more first uplink reference signals corresponding to each of the K first moments; the configuration information is second configuration information; and the prediction result is a second prediction result. The third determining unit 72 is further configured to determine the second configuration information, wherein the second configuration information is used to instruct the terminal to perform position prediction by using the K second measurement results; and determine second prediction results of the terminal respectively corresponding to M second moments based on the second configuration information and the K second measurement results. Herein, the second prediction results are related to position information of the terminal.

In some embodiments, the third determining unit 72 is further configured to determine the second prediction results of the terminal respectively corresponding to the M second moments by using a trained position prediction model based on the second configuration information and the K second measurement results, wherein the position prediction model includes a neural network model or a machine learning model.

In some embodiments, the second prediction result includes: position information of the terminal, or information for estimating a position of the terminal.

In some embodiments, the second prediction result includes information for estimating a position of the terminal, the information for estimating a position of the terminal includes one or more of: time difference(s) of one or more second uplink reference signals corresponding to each of the M second moments; round-trip delay(s) of one or more second uplink reference signals corresponding to each of the M second moments; Angle(s) of Arrival (AOA) of one or more second uplink reference signals corresponding to each of the M second moments; Angle(s) of Departure (AOD) of one or more second uplink reference signals corresponding to each of the M second moments; Reference Signal Received Power (RSRP) of one or more second uplink reference signals corresponding to each of the M second moments; multipath measurement information of one or more second uplink reference signals corresponding to each of the M second moments; and Line of Sight (LOS) indication information of one or more second uplink reference signals corresponding to each of the M second moments.

In some embodiments, the second prediction result further includes: beam information of one or more second uplink reference signals corresponding to each of the M second moments; and/or, a second probability value of the second prediction result of the terminal corresponding to each of the M second moments, wherein the second probability value represents a confidence of the second prediction result of the terminal.

In some embodiments, the third acquiring unit 71 is further configured to receive second assistance information from the second network device.

In some embodiments, input data of the position prediction model includes: K second measurement results; or the second configuration information and the K second measurement results; or the K second measurement results and second assistance information; or the second configuration information, the K second measurement results, and the second assistance information.

In some embodiments, the second assistance information includes one or more of: index(es) of one or more first uplink reference signals corresponding to each of the K first moments; timestamp information of one or more first uplink reference signals corresponding to each of the K first moments; timestamp information of the second measurement result corresponding to each of the K first moments; beam information of one or more first uplink reference signals corresponding to each of the K first moments; and speed information of the terminal corresponding to each of the K first moments.

In some embodiments, the spatial information of the first uplink reference signal includes one or more of: Spatial Relation Information (SRI) of the first uplink reference signal, which is configured and/or activated by the second network device; an uplink Transmission Configuration Indicator (TCI) state and/or a joint TCI state of the first uplink reference signal; a spatial transmit filter of the first uplink reference signal determined by the terminal, wherein the spatial transmit filter is determined by the terminal according to a measurement result of a received downlink reference signal; and an index of the first uplink reference signal.

In some embodiments, the second configuration information includes one or more of: fourth indication information, fifth indication information, and sixth indication information, wherein the fourth indication information is used to indicate time configuration information of the M second moments; the fifth indication information is used to indicate whether to predict beam information of one or more second uplink reference signals corresponding to each of the M second moments; and the sixth indication information is used to indicate whether to predict a second probability value of the second prediction result of the terminal corresponding to each of the M second moments.

In some embodiments, the second measurement result includes one or more of: time delay information of the first uplink reference signal; phase information of the first uplink reference signal; power information of the first uplink reference signal; a Channel Impulse Response (CIR) of the first uplink reference signal; a Power Delay Profile (PDP) of the first uplink reference signal; a Delay Profile (DP) of the first uplink reference signal; RSRP of the first uplink reference signal; a reference signal reception path power of the first uplink reference signal; a Time of Arrival (TOA) of the first uplink reference signal; and an uplink Time Difference of Arrival (TDOA) of the first uplink reference signal.

In some embodiments, the third acquiring unit 71 is further configured to acquire the second prediction results of the terminal respectively corresponding to the M second moments from a second network device.

In some embodiments, the second prediction results of the terminal respectively corresponding to the M second moments are carried in second positioning response information. Herein, the second positioning response information is used to indicate that the second network device allows the first network device to acquire position information of the terminal.

In some embodiments, the second network device includes one or more of: a base station device in a cell, a Transmission Reception Point (TRP) in the base station device, and an antenna point in the base station device.

In some embodiments, the first uplink reference signal includes Sounding Reference Signal (SRS).

In some embodiments, the first or fourth indication information includes one or more of: a number of the M second moments; an interval of the M second moments; a system frame number corresponding to each of the M second moments; a slot number corresponding to each of the M second moments; and a time expressed in Coordinated Universal Time (UTC) corresponding to each of the M second moments.

In some embodiments, the third sending unit 73 is configured to send first configuration information to the terminal; or send second configuration information to a second network device.

In some embodiments, the first configuration information is carried in first positioning request information, wherein the first positioning request information is used to indicate that the first network device requests acquisition of position information of the terminal from the terminal; the second configuration information is carried in second positioning request information, wherein the second positioning request information is used to indicate that the first network device requests acquisition of position information of the terminal from the second network device.

In some embodiments, the third determining unit 72 is further configured to determine the position information of the terminal respectively corresponding to the M second moments according to the information for estimating the position of the terminal respectively corresponding to the M second moments.

Those skilled in the art should understand that the related description of the above-described position prediction apparatuses according to the embodiments of the disclosure can be understood with reference to the related description of the position prediction methods according to the embodiments of the disclosure.

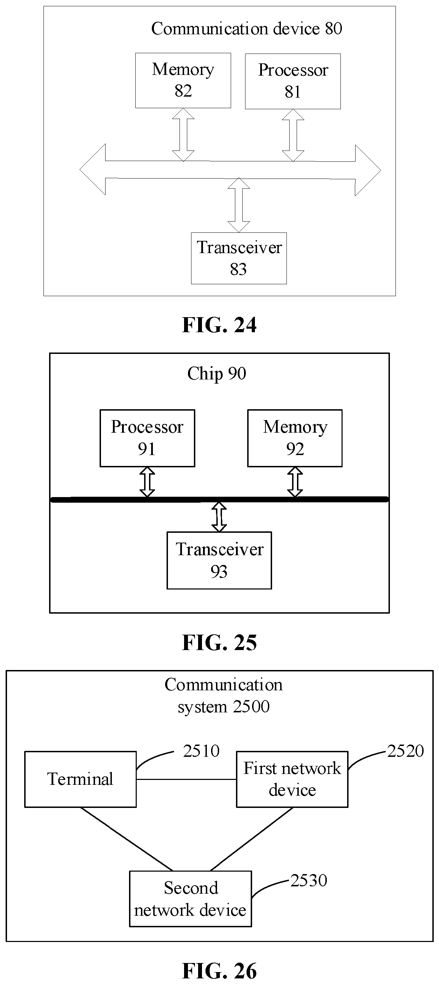

FIG. 24 is a schematic structural diagram of an optional communication device according to an embodiment of the disclosure. The communication device 80 may be a terminal device or a network device. The communication device 80 illustrated in FIG. 24 includes a processor 81 that can invoke and run a computer program from a memory to perform the method in the embodiments of the disclosure.

Optionally, as shown in FIG. 24, the communication device 80 may further include a memory 82. The processor 81 may invoke and run a computer program from the memory 82 to perform the method in the embodiments of the disclosure.

The memory 82 can be a separate device independent of the processor 81, or it can be integrated within the processor 81.

Optionally, as shown in FIG. 24, the communication device 80 may further include a transceiver 83, and the processor 81 may control the transceiver 83 to communicate with other devices, specifically, may transmit information or data to other devices, or receive information or data transmitted by other devices.

The transceiver 83 is also referred to as a communication interface. The transceiver 83 is configured to receive and send signals in the process of sending and receiving information to or from other external network elements.

Transceiver 83 may include a transmitter and a receiver. The transceiver 83 may further include antennas, and the number of antennas may be one or more.

Optionally, the communication device 80 may specifically be the network device of the embodiments of the disclosure, and the communication device 80 may perform corresponding procedures performed by the network device in each method of the embodiments of the disclosure, which will not be repeated here for the sake of brevity.

Optionally, the communication device 80 may specifically be the terminal (mobile terminal/terminal device) of the embodiments of the disclosure, and the communication device 80 may perform corresponding procedures performed by the terminal in each method of the embodiments of the disclosure, which will not be repeated here for the sake of brevity.

FIG. 25 is a schematic structural diagram of an optional chip according to an embodiment of the disclosure. The chip 90 shown in FIG. 25 includes a processor 91 that can invoke and run a computer program from a memory to perform the method in the embodiments of the disclosure.

Optionally, as shown in FIG. 25, the chip 90 may further include a memory 92. The processor 91 may invoke and run a computer program from the memory 92 to perform the method in the embodiments of the disclosure.

The memory 92 can be a separate device independent of the processor 91, or it can be integrated within the processor 91.

Optionally, as shown in FIG. 25, the chip 90 may further include a transceiver 93 (also referred to as a communication interface) configured to receive and send signals in the process of sending and receiving information to or from the device or chip.

Optionally, the transceiver 93 may further include an input interface. The processor 91 may control the input interface to communicate with other devices or chips, specifically, may receive information or data transmitted by other devices or chips.

Optionally, the transceiver 93 may include an output interface. The processor 91 may control the output interface to communicate with other devices or chips, specifically, may send information or data to other devices or chips.

Optionally, the chip can be applied to the network device in the embodiments of the disclosure, and the chip can perform corresponding procedures performed by the network device in each method of the embodiments of the disclosure, which will not be repeatedly described here for the sake of simplicity.

Optionally, the chip can be applied to the terminal (mobile terminal/terminal device) in the embodiments of the disclosure, and the chip can perform corresponding procedures performed by the terminal in each method of the embodiments of the disclosure, which will not be repeatedly described here for the sake of simplicity.

It should be understood that the chip mentioned in the embodiments of the disclosure may also be referred to as system-level chip, system chip, chip system, or System-on-Chip (SoC), among other terms.

Embodiments of the disclosure also provide a computer storage medium storing one or more programs, and the one or more programs can be executed by one or more processors to implement the method in the embodiments of the disclosure.

FIG. 26 is a schematic diagram of an optional communication system according to an embodiment of the disclosure. As shown in FIG. 26, the communication system 2500 includes a terminal 2510, a first network device 2520, and a second network device 2530.

The terminal 2510 may be used to implement the corresponding functions implemented by the terminal in the above-described method, and the first network device 2520 and the second network device 2530 may be used to implement the corresponding functions implemented by the network device in the above-described method, which will not be described again here for brevity.

It should be understood that the processor of the embodiments of the disclosure may be an integrated circuit chip having signal processing capabilities. In the implementation process, the steps of the above-described method embodiments may be performed by integrated logic circuits of hardware in the processor or instructions in the form of software. The processor may be a general purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the disclosure may be implemented or executed. The general-purpose processor may be a microprocessor, or the processor may be any conventional processor or the like. The steps of the method disclosed in the embodiments of the disclosure may be directly embodied as execution by a hardware decoding processor, or execution by hardware and software modules in the decoding processor. The software module may be located in a mature storage medium in the art, such as random access memory, flash memory, read-only memory, programmable read-only memory, electrically erasable and writable programmable memory, or register, etc. The storage medium is located in the memory, and the processor reads the information in the memory, and performs the steps of the above methods in combination with its hardware.

It can be understood that the memory in the embodiments of the disclosure may be either volatile memory or non-volatile memory, or may include both volatile and non-volatile memories. The non-volatile memory can be Read-Only Memory (ROM), Programmable ROM (PROM), Erasable Programmable ROM (EPROM), Electrically Erasable Programmable ROM (EEPROM), or Flash memory. The volatile memory can be Random Access Memory (RAM), which serves as external high-speed cache. By way of illustration, but not by way of limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink Dynamic Random Access Memory (SLDRAM), and Direct Rambus Random Access Memory (DR RAM). It should be noted that the memory of the systems and methods described herein is intended to include, but is not limited to, these and any other suitable type of memory.

It should be understood that the above memory is illustrative but not limiting, for example, the memory in the embodiments of the disclosure may also be Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), Direct Rambus Random Access Memory (DR RAM), and so on. In other words, the memory in the embodiments of the disclosure is intended to include, but is not limited to, these and any other suitable types of memory.

An embodiment of the disclosure further provides a computer-readable storage medium for storing a computer program.

Optionally, the computer-readable storage medium can be applied to the network device in the embodiments of the disclosure, and the computer program enables the computer to perform corresponding procedures performed by the network device in various methods described in the embodiments of the disclosure. For brevity, details thereof are not repeated here.

Optionally, the computer-readable storage medium can be applied to the terminal (mobile terminal/terminal device) in the embodiments of the disclosure, and the computer program enables the computer to perform corresponding procedures performed by the terminal in various methods described in the embodiments of the disclosure. For brevity, details thereof are not repeated here.

An embodiment of the disclosure further provides a computer program product including computer program instructions.

Optionally, the computer program product can be applied to the network device in the embodiments of the disclosure, and the computer program instructions enable the computer to perform the corresponding procedures performed by the network device in various methods described in the embodiments of the disclosure. For brevity, details thereof are not repeated here.

Optionally, the computer program product can be applied to the terminal (mobile terminal/terminal device) in the embodiments of the disclosure, and the computer program instructions enable the computer to perform the corresponding procedures performed by the terminal in various methods described in the embodiments of the disclosure. For brevity, details thereof are not repeated here.

An embodiment of the disclosure further provides a computer program.

Optionally, the computer program can be applied to the network device in the embodiments of the disclosure, and the computer program, when run on a computer, enables the computer to perform corresponding procedures performed by the network device in various methods described in the embodiments of the disclosure. For brevity, details thereof are not repeated here.

Optionally, the computer program can be applied to the terminal (mobile terminal/terminal device) in the embodiments of the disclosure, and when run on a computer, the computer program enables the computer to perform the corresponding procedures performed by the terminal in various methods described in the embodiments of the disclosure. For brevity, details thereof are not repeated here.

Those of ordinary skill in the art will appreciate that the units and algorithmic steps of the various examples described in the embodiments disclosed herein can be implemented in electronic hardware, in computer software, or in a combination of computer software and electronic hardware. Whether these functions are performed in hardware or software depends on the specific application and design constraints of the technical solution. Those skilled in the art may use different methods for implementing the described functions for each particular application, but such implementations should not be considered as going beyond the scope of the disclosure.

Those skilled in the art can clearly understand that for convenience and conciseness of the description, for the specific working processes of the systems, devices, and units described above, reference may be made to the corresponding processes in the aforementioned method embodiments, which will not be repeatedly described herein.

In the several embodiments provided in the present disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some features may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

When the aforementioned functions are implemented in the form of software functional units and sold or used as independent products, the software functional units can be stored in a computer-readable storage medium. Based on this understanding, the core or contributory part of the technical solution of the disclosure with respect to the prior part, or portions thereof, can be embodied in the form of a software product. This computer software product is stored in a storage medium and includes several instructions that enable a computer device (which can be a personal computer, server, network device, etc.) to perform all or part of the steps described in the various embodiments of the disclosure. The storage medium includes various media capable of storing program codes, such as USB flash drive, mobile hard disk, Read-Only Memory (ROM), Random Access Memory (RAM), magnetic disk or an optical disk.

What described above are only the specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A position prediction method, applied to a terminal, the method comprising:
receiving first configuration information, wherein the first configuration information is used to instruct the terminal to perform position prediction by using first measurement results respectively corresponding to K first moments; and
determining first prediction results of the terminal respectively corresponding to M second moments based on the first configuration information and the first measurement results respectively corresponding to the K first moments,
wherein the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1.

2. The method of claim 1, wherein determining the first prediction results of the terminal respectively corresponding to the M second moments based on the first configuration information and the first measurement results respectively corresponding to the K first moments comprises:
determining the first prediction results of the terminal respectively corresponding to the M second moments by using a trained position prediction model based on the first configuration information and the K first measurement results, wherein the position prediction model comprises a neural network model or a machine learning model.

3. The method of claim 1 or 2, wherein the first prediction result comprises: position information of the terminal, or information for estimating a position of the terminal.

4. The method of claim 3, wherein the information for estimating a position of the terminal comprises one or more of:
time difference(s) of one or more second downlink reference signals corresponding to each of the M second moments;
round-trip delay(s) of one or more second downlink reference signals corresponding to each of the M second moments;
Angle(s) of Arrival (AOA) of one or more second downlink reference signals corresponding to each of the M second moments;
Angle(s) of Departure (AOD) of one or more second downlink reference signals corresponding to each of the M second moments;
Reference Signal Received Power (RSRP) of one or more second downlink reference signals corresponding to each of the M second moments;
multipath measurement information of one or more second downlink reference signals corresponding to each of the M second moments;
Line of Sight (LOS) indication information of one or more second downlink reference signals corresponding to each of the M second moments; and
Time of Arrival (TOA) of one or more second downlink reference signals corresponding to each of the M second moments.

5. The method of claim 3 or 4, wherein the first prediction result further comprises:
beam information of one or more second downlink reference signals corresponding to each of the M second moments; and/or
a first probability value of the first prediction result of the terminal corresponding to each of the M second moments, wherein the first probability value represents a confidence of the first prediction result of the terminal.

6. The method of any one of claims 2 to 5, wherein input data of the position prediction model comprises:
K first measurement results; or
the first configuration information and the K first measurement results; or
the K first measurement results and first assistance information; or
the first configuration information, the K first measurement results, and the first assistance information.

7. The method of claim 6, wherein the first assistance information comprises one or more of:
index(es) of one or more first downlink reference signals corresponding to each of the K first moments;
timestamp information of one or more first downlink reference signals corresponding to each of the K first moments;
timestamp information of the first measurement result corresponding to each of the K first moments;
beam information of one or more first downlink reference signals corresponding to each of the K first moments; and
speed information of the terminal corresponding to each of the K first moments.

8. The method of claim 7, wherein the beam information of the first downlink reference signal comprises one or more of:
a joint Transmission Configuration Indicator (TCI) state of the first downlink reference signal;
a Quasi Co-Location (QCL) type of the first downlink reference signal; and
a spatial reception filter of the first downlink reference signal.

9. The method of any one of claims 2 to 8, wherein the first configuration information comprises one or more of: first indication information, second indication information, and third indication information,
wherein the first indication information is used to indicate time configuration information of the M second moments;
the second indication information is used to indicate whether to predict beam information of one or more second downlink reference signals corresponding to each of the M second moments; and
the third indication information is used to indicate whether to predict a first probability value of the first prediction result of the terminal corresponding to each of the M second moments.

10. The method of claim 9, wherein the first indication information comprises one or more of:
a number of the M second moments;
an interval of the M second moments;
a system frame number corresponding to each of the M second moments;
a slot number corresponding to each of the M second moments; and
a time expressed in Coordinated Universal Time (UTC) corresponding to each of the M second moments.

11. The method of any one of claims 1 to 10, wherein the first configuration information is carried in first positioning request information sent by a first network device, wherein the first positioning request information is used to indicate that the first network device requests acquisition of position information of the terminal from the terminal.

12. The method of any one of claims 1 to 11, wherein the first measurement result comprises one or more of:
time delay information of the first downlink reference signal;
phase information of the first downlink reference signal;
power information of the first downlink reference signal;
a Channel Impulse Response (CIR) of the first downlink reference signal;
a Power Delay Profile (PDP) of the first downlink reference signal;
a Delay Profile (DP) of the first downlink reference signal;
RSRP of the first downlink reference signal;
a reference signal reception path power of the first downlink reference signal;
a TOA of the first downlink reference signal; and
an uplink Time Difference of Arrival (TDOA) of the first downlink reference signal.

13. The method of any one of claims 1 to 12, further comprising:
sending, to a first network device, the first prediction results of the terminal respectively corresponding to the M second moments.

14. The method of claim 13, wherein the first prediction results of the terminal respectively corresponding to the M second moments are carried in first positioning response information, wherein the first positioning response information is used to indicate that the terminal allows the first network device to acquire position information of the terminal.

15. The method of any one of claims 1 to 14, wherein the first downlink reference signal comprises one or more of:
Positioning Reference Signal (PRS), Synchronization Signal Block (SSB), and Channel State Information-Reference Signal (CSI-RS).

16. The method of any one of claims 1 to 15, further comprising:
acquiring downlink reference signal configuration information sent by a second network device; and
receiving, according to the downlink reference signal configuration information, one or more first downlink reference signals corresponding to each of the K first moments sent by the second network device.

17. The method of claim 16, wherein the second network device comprises one or more of:
a base station device in a cell, a Transmission Reception Point (TRP) in the base station device, and an antenna point in the base station device.

18. The method of claim 1, further comprising:
sending the K first measurement results to a first network device.

19. The method of claim 18, further comprising:
sending first assistance information to the first network device.

20. A position prediction method, applied to a second network device, the method comprising:
receiving second configuration information, wherein the second configuration information is used to instruct the second network device to perform position prediction by using second measurement results respectively corresponding to K first moments; and
determining second prediction results of a terminal respectively corresponding to M second moments based on the second configuration information and the second measurement results respectively corresponding to the K first moments,
wherein the second measurement results respectively corresponding to the K first moments are obtained by measuring one or more received first uplink reference signals corresponding to each of the K first moments, the second prediction results are related to position information of the terminal, and the second moment is a future moment after the first moment, K and M being positive integers greater than or equal to 1.

21. The method of claim 20, wherein determining the second prediction results of the terminal respectively corresponding to the M second moments based on the second configuration information and the second measurement results respectively corresponding to the K first moments comprises:
determining the second prediction results of the terminal respectively corresponding to the M second moments by using a trained position prediction model based on the second configuration information and the K second measurement results, wherein the position prediction model comprises a neural network model or a machine learning model.

22. The method of claim 20 or 21, wherein the second prediction result comprises information for estimating a position of the terminal, the information for estimating a position of the terminal comprises one or more of:
time difference(s) of one or more second uplink reference signals corresponding to each of the M second moments;
round-trip delay(s) of one or more second uplink reference signals corresponding to each of the M second moments;
Angle(s) of Arrival (AOA) of one or more second uplink reference signals corresponding to each of the M second moments;
Angle(s) of Departure (AOD) of one or more second uplink reference signals corresponding to each of the M second moments;
Reference Signal Received Power (RSRP) of one or more second uplink reference signals corresponding to each of the M second moments;
multipath measurement information of one or more second uplink reference signals corresponding to each of the M second moments; and
Line of Sight (LOS) indication information of one or more second uplink reference signals corresponding to each of the M second moments.

23. The method of claim 22, wherein the second prediction result further comprises:
beam information of one or more second uplink reference signals corresponding to each of the M second moments; and/or
a second probability value of the second prediction result of the terminal corresponding to each of the M second moments, wherein the second probability value represents a confidence of the second prediction result of the terminal.

24. The method of any one of claims 21 to 23, wherein input data of the position prediction model comprises:
K second measurement results; or
the second configuration information and the K second measurement results; or
the K second measurement results and second assistance information; or
the second configuration information, the K second measurement results, and the second assistance information.

25. The method of claim 24, wherein the second assistance information comprises one or more of:
index(es) of one or more first uplink reference signals corresponding to each of the K first moments;
timestamp information of one or more first uplink reference signals corresponding to each of the K first moments;
timestamp information of the second measurement result corresponding to each of the K first moments;
beam information of one or more first uplink reference signals corresponding to each of the K first moments; and
speed information of the terminal corresponding to each of the K first moments.

26. The method of claim 25, wherein the beam information of the first uplink reference signal comprises one or more of:
Spatial Relation Information (SRI) of the first uplink reference signal, which is configured and/or activated by the second network device;
an uplink Transmission Configuration Indicator (TCI) state and/or a joint TCI state of the first uplink reference signal;
a spatial transmit filter of the first uplink reference signal determined by the terminal, wherein the spatial transmit filter is determined by the terminal according to a measurement result of a received downlink reference signal; and
an index of the first uplink reference signal.

27. The method of any one of claims 20 to 26, wherein the second configuration information comprises one or more of: fourth indication information, fifth indication information, and sixth indication information,
wherein the fourth indication information is used to indicate time configuration information of the M second moments;
the fifth indication information is used to indicate whether to predict beam information of one or more second uplink reference signals corresponding to each of the M second moments; and
the sixth indication information is used to indicate whether to predict a second probability value of the second prediction result of the terminal corresponding to each of the M second moments.

28. The method of claim 27, wherein the fourth indication information comprises one or more of:
a number of the M second moments;
an interval of the M second moments;
a system frame number corresponding to each of the M second moments;
a slot number corresponding to each of the M second moments; and
a time expressed in Coordinated Universal Time (UTC) corresponding to each of the M second moments.

29. The method of any one of claims 20 to 28, wherein the second configuration information is carried in second positioning request information sent by a first network device, wherein the second positioning request information is used to indicate that the first network device requests acquisition of position information of the terminal from the second network device.

30. The method of claim 29, wherein the second network device comprises one or more of:
a base station device in a cell, a Transmission Reception Point (TRP) in the base station device, and an antenna point in the base station device.

31. The method of any one of claims 20 to 30, wherein the second measurement result comprises one or more of:
time delay information of the first uplink reference signal;
phase information of the first uplink reference signal;
power information of the first uplink reference signal;
a Channel Impulse Response (CIR) of the first uplink reference signal;
a Power Delay Profile (PDP) of the first uplink reference signal;
a Delay Profile (DP) of the first uplink reference signal;
RSRP of the first uplink reference signal;
a reference signal reception path power of the first uplink reference signal;
a Time of Arrival (TOA) of the first uplink reference signal; and
an uplink Time Difference of Arrival (TDOA) of the first uplink reference signal.

32. The method of any one of claims 20 to 31, further comprising:
sending, to a first network device, the second prediction results of the terminal respectively corresponding to the M second moments.

33. The method of claim 32, wherein the second prediction results of the terminal respectively corresponding to the M second moments are carried in second positioning response information, wherein the second positioning response information is used to indicate that the second network device allows the first network device to acquire position information of the terminal.

34. The method of any one of claims 20 to 33, wherein the first uplink reference signal comprises Sounding Reference Signal (SRS).

35. The method of claim 20, further comprising:
sending the K second measurement results to a first network device.

36. The method of claim 35, further comprising:
sending second assistance information to the first network device.

37. The method of any one of claims 20 to 36, further comprising:
receiving one or more first uplink reference signals corresponding to each of the K first moments sent by the terminal according to uplink reference signal configuration information.

38. A position prediction method, applied to a first network device, the method comprising:
determining configuration information, wherein the configuration information is used to instruct the first network device to perform position prediction by using measurement results respectively corresponding to K first moments; and
determining prediction results of a terminal respectively corresponding to M second moments based on the configuration information and the measurement results respectively corresponding to the K first moments,
wherein the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1.

39. The method of claim 38, wherein the K measurement results are K first measurement results from the terminal; the K first measurement results are obtained by measuring one or more first downlink reference signals corresponding to each of the K first moments; the configuration information is first configuration information; and the prediction result is a first prediction result,
determining the prediction results of the terminal respectively corresponding to the M second moments based on the configuration information and the measurement results respectively corresponding to the K first moments comprises:
determining the first prediction results of the terminal respectively corresponding to the M second moments by using a trained position prediction model based on the first configuration information and the K first measurement results, wherein the position prediction model comprises a neural network model or a machine learning model.

40. The method of claim 39, wherein the first prediction result comprises: position information of the terminal, or information for estimating a position of the terminal.

41. The method of claim 40, wherein the information for estimating a position of the terminal comprises one or more of:
time difference(s) of one or more second downlink reference signals corresponding to each of the M second moments;
round-trip delay(s) of one or more second downlink reference signals corresponding to each of the M second moments;
Angle(s) of Arrival (AOA) of one or more second downlink reference signals corresponding to each of the M second moments;
Angle(s) of Departure (AOD) of one or more second downlink reference signals corresponding to each of the M second moments;
Reference Signal Received Power (RSRP) of one or more second downlink reference signals corresponding to each of the M second moments;
multipath measurement information of one or more second downlink reference signals corresponding to each of the M second moments;
Line of Sight (LOS) indication information of one or more second downlink reference signals corresponding to each of the M second moments; and
Time of Arrival (TOA) of one or more second downlink reference signals corresponding to each of the M second moments.

42. The method of claim 40 or 41, wherein the first prediction result further comprises:
beam information of one or more second downlink reference signals corresponding to each of the M second moments; and/or
a first probability value of the first prediction result of the terminal corresponding to each of the M second moments, wherein the first probability value represents a confidence of the first prediction result of the terminal.

43. The method of any one of claims 39 to 42, further comprising:
receiving first assistance information from the terminal.

44. The method of any one of claims 39 to 43, wherein input data of the position prediction model comprises:
the K first measurements; or
the first configuration information and the K first measurement results; or
the K first measurement results and first assistance information; or
the first configuration information, the K first measurement results, and the first assistance information.

45. The method of claim 44, wherein the first assistance information comprises one or more of:
index(es) of one or more first downlink reference signals corresponding to each of the K first moments;
timestamp information of one or more first downlink reference signals corresponding to each of the K first moments;
timestamp information of the first measurement result corresponding to each of the K first moments;
beam information of one or more first downlink reference signals corresponding to each of the K first moments; and
speed information of the terminal corresponding to each of the K first moments.

46. The method of claim 45, wherein the beam information of the first downlink reference signal comprises one or more of:
a joint Transmission Configuration Indicator (TCI) state of the first downlink reference signal;
a Quasi Co-Location (QCL) type of the first downlink reference signal; and
a spatial reception filter of the first downlink reference signal.

47. The method of any one of claims 39 to 46, wherein the first configuration information comprises one or more of: first indication information, second indication information, and third indication information,
wherein the first indication information is used to indicate time configuration information of the M second moments;
the second indication information is used to indicate whether to predict beam information of one or more second downlink reference signals corresponding to each of the M second moments; and
the third indication information is used to indicate whether to predict a first probability value of the first prediction result of the terminal corresponding to each of the M second moments.

48. The method of any one of claims 39 to 47, wherein the first measurement result comprises one or more of:
time delay information of the first downlink reference signal;
phase information of the first downlink reference signal;
power information of the first downlink reference signal;
a Channel Impulse Response (CIR) of the first downlink reference signal;
a Power Delay Profile (PDP) of the first downlink reference signal;
a Delay Profile (DP) of the first downlink reference signal;
RSRP of the first downlink reference signal;
a reference signal reception path power of the first downlink reference signal;
a TOA of the first downlink reference signal; and
an uplink Time Difference of Arrival (TDOA) of the first downlink reference signal.

49. The method of claim 48, further comprising:
acquiring the first prediction results of the terminal respectively corresponding to the M second moments from the terminal.

50. The method of claim 49, wherein the first prediction results of the terminal respectively corresponding to the M second moments are carried in first positioning response information, wherein the first positioning response information is used to indicate that the terminal allows the first network device to acquire position information of the terminal.

51. The method of any one of claims 39 to 50, wherein the first downlink reference signal comprises one or more of:
Positioning Reference Signal (PRS), Synchronization Signal Block (SSB), and Channel State Information-Reference Signal (CSI-RS).

52. The method of claim 38, wherein the K measurement results are K second measurement results from a second network device; the K second measurement results are obtained by measuring one or more first uplink reference signals corresponding to each of the K first moments; the configuration information is second configuration information; and the prediction result is a second prediction result,
determining the prediction results of the terminal respectively corresponding to the M second moments based on the configuration information and the measurement results respectively corresponding to the K first moments comprises:
determining the second prediction results of the terminal respectively corresponding to the M second moments by using a trained position prediction model based on the second configuration information and the K second measurement results, wherein the position prediction model comprises a neural network model or a machine learning model.

53. The method of claim 52, wherein the second prediction result comprises: position information of the terminal, or information for estimating a position of the terminal.

54. The method of claim 53, wherein the information for estimating a position of the terminal comprises one or more of:
time difference(s) of one or more second uplink reference signals corresponding to each of the M second moments;
round-trip delay(s) of one or more second uplink reference signals corresponding to each of the M second moments;
Angle(s) of Arrival (AOA) of one or more second uplink reference signals corresponding to each of the M second moments;
Angle(s) of Departure (AOD) of one or more second uplink reference signals corresponding to each of the M second moments;
Reference Signal Received Power (RSRP) of one or more second uplink reference signals corresponding to each of the M second moments;
multipath measurement information of one or more second uplink reference signals corresponding to each of the M second moments; and
Line of Sight (LOS) indication information of one or more second uplink reference signals corresponding to each of the M second moments.

55. The method of claim 53 or 54, wherein the second prediction result further comprises:
beam information of one or more second uplink reference signals corresponding to each of the M second moments; and/or
a second probability value of the second prediction result of the terminal corresponding to each of the M second moments, wherein the second probability value represents a confidence of the second prediction result of the terminal.

56. The method of any one of claims 52 to 55, further comprising:
receiving second assistance information from the second network device.

57. The method of any one of claims 53 to 56, wherein input data of the position prediction model comprises:
the K second measurements; or
the second configuration information and the K second measurement results; or
the K second measurement results and second assistance information; or
the second configuration information, the K second measurement results, and the second assistance information.

58. The method of claim 57, wherein the second assistance information comprises one or more of:
index(es) of one or more first uplink reference signals corresponding to each of the K first moments;
timestamp information of one or more first uplink reference signals corresponding to each of the K first moments;
timestamp information of the second measurement result corresponding to each of the K first moments;
beam information of one or more first uplink reference signals corresponding to each of the K first moments; and
speed information of the terminal corresponding to each of the K first moments.

59. The method of claim 58, wherein the beam information of the first uplink reference signal comprises one or more of:
Spatial Relation Information (SRI) of the first uplink reference signal, which is configured and/or activated by the second network device;
an uplink Transmission Configuration Indicator (TCI) state and/or a joint TCI state of the first uplink reference signal;
a spatial transmit filter of the first uplink reference signal determined by the terminal, wherein the spatial transmit filter is determined by the terminal according to a measurement result of a received downlink reference signal; and
an index of the first uplink reference signal.

60. The method of any one of claims 52 to 59, wherein the second configuration information comprises one or more of: fourth indication information, fifth indication information, and sixth indication information,
wherein the fourth indication information is used to indicate time configuration information of the M second moments;
the fifth indication information is used to indicate whether to predict beam information of one or more second uplink reference signals corresponding to each of the M second moments; and
the sixth indication information is used to indicate whether to predict a second probability value of the second prediction result of the terminal corresponding to each of the M second moments.

61. The method of any one of claims 52 to 60, wherein the second measurement result comprises one or more of:
time delay information of the first uplink reference signal;
phase information of the first uplink reference signal;
power information of the first uplink reference signal;
a Channel Impulse Response (CIR) of the first uplink reference signal;
a Power Delay Profile (PDP) of the first uplink reference signal;
a Delay Profile (DP) of the first uplink reference signal;
RSRP of the first uplink reference signal;
a reference signal reception path power of the first uplink reference signal;
a Time of Arrival (TOA) of the first uplink reference signal; and
an uplink Time Difference of Arrival (TDOA) of the first uplink reference signal.

62. The method of claim 38, further comprising:
acquiring the second prediction results of the terminal respectively corresponding to the M second moments from a second network device.

63. The method of claim 62, wherein the second prediction results of the terminal respectively corresponding to the M second moments are carried in second positioning response information, wherein the second positioning response information is used to indicate that the second network device allows the first network device to acquire position information of the terminal.

64. The method of claim 63, wherein the second network device comprises one or more of:
a base station device in a cell, a Transmission Reception Point (TRP) in the base station device, and an antenna point in the base station device.

65. The method of any one of claims 52 to 61, wherein the first uplink reference signal comprises Sounding Reference Signal (SRS).

66. The method of claim 47 or 60, wherein the first or fourth indication information comprises one or more of:
a number of the M second moments;
an interval of the M second moments;
a system frame number corresponding to each of the M second moments;
a slot number corresponding to each of the M second moments; and
a time expressed in Coordinated Universal Time (UTC) corresponding to each of the M second moments.

67. The method of claim 38, further comprising:
sending first configuration information to the terminal; or
sending second configuration information to a second network device.

68. The method of claim 67, wherein
the first configuration information is carried in first positioning request information, wherein the first positioning request information is used to indicate that the first network device requests acquisition of position information of the terminal from the terminal;
the second configuration information is carried in second positioning request information, wherein the second positioning request information is used to indicate that the first network device requests acquisition of position information of the terminal from the second network device.

69. The method of claim 41 or 54, further comprising:
determining the position information of the terminal respectively corresponding to the M second moments according to the information for estimating the position of the terminal respectively corresponding to the M second moments.

70. A position prediction apparatus, applied to a terminal, the apparatus comprising:
a first acquiring unit, configured to receive first configuration information, wherein the first configuration information is used to instruct the terminal to perform position prediction by using first measurement results respectively corresponding to K first moments; and
a first determining unit, configured to determine first prediction results of the terminal respectively corresponding to M second moments based on the first configuration information and the first measurement results respectively corresponding to the K first moments,
wherein the first measurement results respectively corresponding to the K first moments are obtained by measuring one or more received first downlink reference signals corresponding to each of the K first moments, the first prediction results are related to position information of the terminal, and the second moment is a future moment after the first moment, K and M being positive integers greater than or equal to 1.

71. A position prediction apparatus, applied to a second network device, the apparatus comprising:
a second acquiring unit, configured to receive second configuration information, wherein the second configuration information is used to instruct the second network device to perform position prediction by using second measurement results respectively corresponding to K first moments; and
a second determining unit, configured to determine second prediction results of a terminal respectively corresponding to M second moments based on the second configuration information and the second measurement results respectively corresponding to the K first moments,
wherein the second measurement results respectively corresponding to the K first moments are obtained by measuring one or more received first uplink reference signals corresponding to each of the K first moments, the second prediction results are related to position information of the terminal, and the second moment is a future moment after the first moment, K and M being positive integers greater than or equal to 1.

72. A position prediction apparatus, applied to a first network device, the apparatus comprising:
a third determining unit, configured to: determine configuration information, wherein the configuration information is used to instruct the first network device to perform position prediction by using measurement results respectively corresponding to K first moments, and
determine prediction results of a terminal respectively corresponding to M second moments based on the configuration information and the measurement results respectively corresponding to the K first moments,
wherein the measurement results respectively corresponding to the K first moments are obtained by measuring one or more reference signals corresponding to each of the K first moments, the prediction results are related to position information of the terminal, and the second moment is a future moment after the first moment, K and M being positive integers greater than or equal to 1.

73. A communication device, comprising:
a memory configured to store a computer program;
a processor, connected to the memory, configured to invoke and execute the computer program from the memory to perform the method of any one of claims 1 to 19, or to perform the method of any one of claims 20 to 37, or to perform the method of any one of claims 38 to 69; and
a transceiver, configured to receive and send signals in the process of sending and receiving information to or from other external network elements.

74. A chip, comprising:
a memory, configured to store a computer program;
a processor, connected to the memory, configured to invoke and execute the computer program from the memory to cause a device mounted with the chip to perform the method of any one of claims 1 to 19, or to perform the method of any one of claims 20 to 37, or to perform the method of any one of claims 38 to 69; and
a transceiver, configured to receive and send signals in the process of sending and receiving information to or from the device or chip.

75. A computer-readable storage medium having stored thereon a computer program that, when executed by at least one processor, implements the method of any one of claims 1 to 19, or implements the method of any one of claims 20 to 37, or implements the method of any one of claims 38 to 69.
